# EUROPEAN PATENT APPLICATION

(11) **EP 4 468 173 A1**
(43) Date of publication of application: **27.11.2024**
(21) Application number: 24315223.8
(22) Date of filing: 30.04.2024
(51) Int. Cl.: G06F 16/332, G06F 16/9032, G06N 20/00

(54) **SYSTEM, METHOD AND APPARATUS FOR NETWORK SEARCH INCLUDING A CHATBOT**

(30) Priority: 01.05.2023 US 202363463146 P; 06.03.2024 US 202418596801
(71) Applicant: Amadeus S.A.S., 06410 Biot (FR)
(72) Inventor: DEVAUX, Yannick, 06410 Biot (FR); VINCIGUERRA, Jean-Pascal, 06410 Biot (FR)
(74) Representative: Samson & Partner Patentanwälte mbB

(57) **Abstract**

The present specification provides, amongst other things, a novel system, method and apparatus for real time searches. A search engine is provided that generates search parameters based on a natural language conversation with a chatbot. The parameters are parsed into a plurality of portions according to a refinement protocol. At least one of the portions is sent to a first engine for a search, and the results of are transformed using the refinement protocol.

## Description

### PRIORITY

The present disclosure claims priority from US Provisional Patent Application US 63/463146 filed May 1, 2023, the contents of which are incorporated herein by reference.

### FIELD

The present disclosure generally relates to network computing and more particularly to real time searches over the network.

### BACKGROUND

Internet search engines are increasingly powerful but are of such increasing complexity and produce so many different results that they are inadequately curated. This can necessitate repeated queries with slight modifications, which lead to unusable results, resulting in wasted network traffic congestion and drain on server resources.

### SUMMARY

An aspect of the specification provides a method for network search performed by a computing engine, the method including: establishing a connection with a client device over a network; initiating a first session with the client device for engaging in a natural language conversation with the client device; generating parameters using a large language model (LLM) engine based on the conversation; storing the parameters received from the LLM engine with an identifier in a virtual clipboard hosted on the network for resumption of the conversation based on the parameters.

An aspect of the specification provides a method further including detecting a termination of the first session before generating the parameters.

An aspect of the specification provides a method wherein the computing engine is a travel meta-search engine.

An aspect of the specification provides a method wherein the computing engine and the LLM engine are on distinct platforms.

An aspect of the specification provides a method wherein the computing engine and the LLM engine are integrated into a single platform.

An aspect of the specification provides a method wherein the natural language conversation is performed by a chatbot application separate from the LLM engine.

An aspect of the specification provides a method wherein the natural language conversation is performed by a chatbot application integrated into the LLM engine.

An aspect of the specification provides a method wherein the natural language conversation is performed by a chatbot application as a browser extension on the client device that is controlled by the computing engine.

An aspect of the specification provides a method wherein the virtual clipboard is hosted by the computing engine.

An aspect of the specification provides a method wherein the virtual clipboard is hosted by a virtual clipboard engine separate from the computing engine.

An aspect of the specification provides a method wherein the conversation is resumed on a second computing engine in a second session.

An aspect of the specification provides a method wherein the second computing engine is hosted by an online travel agency.

An aspect of the specification provides a method wherein the identifier is associated with personally identifiable information (PII) of a user operating the client device that is stored on the virtual clipboard.

An aspect of the specification provides a method wherein a second computing engine is configured to send an inquiry for permission to access the PII.

An aspect of the specification provides a method wherein the conversation concerns travel-planning and includes one or more of origin, destination, number of passengers, dates, activities and budget preferences and the structured query includes fields matching the preferences.

An aspect of the specification provides a method further including: continuing the natural language conversation during a second session with a second computing engine; updating the parameters using the LLM engine; and, storing the updated parameters received from the LLM engine with an identifier in the virtual clipboard hosted for resumption of the conversation using the updated parameters.

An aspect of the specification provides a method wherein the conversation is a travel planning conversation and the method further includes: continuing the natural language travel-planning conversation during a second session with a second computing engine; generating a travel itinerary based on the travel travel-planning conversation; and sending the itinerary to the client device.

An aspect of the specification provides a method wherein the parameters are generated in a structured JSON format from unstructured content of the conversation.

An aspect of the specification provides a method wherein the parameters consume less memory than the conversation. An aspect of the specification provides a method for search performed by an engine, the method including: initiating a session with a client device for engaging in a natural language conversation with the client device; generating parameters based on the conversation; parsing the parameters into a plurality of portions according to a refinement protocol; sending at least one of the portions to a first travel-actor engine for a first search; receiving a raw outline from the first travel-actor engine based on the at least one of the portions; transforming the raw outline into a travel itinerary responsive to the conversation based on the parameters and the refinement protocol; and, forwarding the travel itinerary to the client device.

An aspect of the specification provides a method wherein the at least one of the portions of the search includes a first portion having structured data fields within the first travel-actor engine and the raw outline includes a partial travel itinerary.

An aspect of the specification provides a method wherein the refinement protocol includes generating a second portion of the at least one of the portions that includes criteria that do not match the structured data fields and the transforming is based on applying the criteria from the second portion to the partial travel itinerary.

An aspect of the specification provides a method wherein applying the criteria includes filtering out superfluous data from the partial travel itinerary based on the criteria.

An aspect of the specification provides a method wherein the refining includes: assigning a weighing score to one or more of the criteria; ranking results of the partial travel itinerary based on the weighting score; and, generating the travel itinerary based on the ranking.

An aspect of the specification provides a method wherein the weighting score is based on an adjustment factor applied to a quantitative metric within the itinerary to assign the ranking.

An aspect of the specification provides a method wherein the quantitative metric is price and the criteria is based on a preferred airline and the adjustment factor generates a notional price for the preferred airline in relation to the prices for the non-preferred airline; the adjustment factor for the purpose of ranking results of the preferred airline higher than the non-preferred airline; the actual price for both preferred airline and non-preferred airlines remaining part of the itinerary.

An aspect of the specification provides a method wherein the refinement protocol includes generating a second portion of travel parameters and further includes, prior to performing the first search; sending the second portion to a second travel-actor engine for a second search; receiving a response from the second travel-actor engine based on the second portion; and, combining the response from the second travel-actor engine into the first search.

An aspect of the specification provides the method of claim1 wherein the parameters are obtained using generative artificial intelligence engine.

An aspect of the specification provides a method wherein the generative artificial intelligence is a large language model (LLM) engine.

An aspect of the specification provides a search engine including a processor and a memory for storing programming instructions executable on the processors; the programming instructions including: initiating a session with a client device for engaging in a natural language conversation with the client device; generating parameters based on the conversation; parsing the parameters into a plurality of portions according to a refinement protocol; sending at least one of the portions to a first travel-actor engine for a first search; receiving a raw outline from the first travel-actor engine based on the at least one of the portions; transforming the raw outline into a travel itinerary responsive to the conversation based on the parameters and the refinement protocol; and, forwarding the travel itinerary to the client device.

An aspect of the specification provides a search engine wherein the at least one of the portions of the search includes a first portion having structured data fields within the first travel-actor engine and the raw outline includes a partial travel itinerary.

An aspect of the specification provides a search engine wherein the refinement protocol includes generating a second portion of the at least one of the portions that includes criteria that do not match the structured data fields and the transforming is based on applying the criteria from the second portion to the partial travel itinerary.

An aspect of the specification provides a search engine wherein applying the criteria includes filtering out superfluous data from the partial travel itinerary based on the criteria.

An aspect of the specification provides a search engine wherein the refining includes: assigning a weighing score to one or more of the criteria; ranking results of the partial travel itinerary based on the weighting score; and, generating the travel itinerary based on the ranking.

An aspect of the specification provides a search engine wherein the weighting score is based on an adjustment factor applied to a quantitative metric within the itinerary to assign the ranking.

An aspect of the specification provides a search engine wherein the quantitative metric is price and the criteria is based on a preferred airline and the adjustment factor generates a notional price for the preferred airline in relation to the prices for the non-preferred airline; the adjustment factor for the purpose of ranking results of the preferred airline higher than the non-preferred airline; the actual price for both preferred airline and non-preferred airlines remaining part of the itinerary.

An aspect of the specification provides a search engine wherein the refinement protocol includes generating a second portion of travel parameters and further includes, prior to performing the first search; sending the second portion to a second travel-actor engine for a second search; receiving a response from the second travel-actor engine based on the second portion; and, combining the response from the second travel-actor engine into the first search.

An aspect of the specification provides a search engine wherein the parameters are obtained using generative artificial intelligence engine.

An aspect of the specification provides a search engine wherein the generative artificial intelligence is a large language model (LLM) engine.

An aspect of the specification provides a method for real-time travel search including: configuring a large language model (LLM) engine with a real-time travel query context shift; receiving, at a natural language processing (NLP) engine, an input message; forwarding the input message from the collaboration platform to the LLM engine; determining, at the LLM engine, that the input message includes an unstructured travel query; preparing, at the LLM engine, a draft response message including a structured travel query based on the unstructured travel query; forwarding the draft response message from the LLM engine to the collaboration platform; sending the structured travel query from the collaboration platform to a travel management engine; receiving, at the collaboration platform, a travel itinerary responsive to the structured travel query, from the travel management engine; and, generating an output message responsive to the input message including the draft response message that substitutes the travel itinerary for the structured travel query.

An aspect of the specification provides a method wherein the travel query includes a transportation-actor component and a hospitality-actor component.

An aspect of the specification provides a method wherein the travel query includes a transportation-actor component that is restricted by an employer policy component.

An aspect of the specification provides a method wherein travel query implies a coordination between travel-actors such that the results are responsively filtered by the coordination.

An aspect of the specification provides a method wherein the coordination is based on aligning a flight schedule with an availability of a ground-transportation service and accommodation.

An aspect of the specification provides a method wherein the travel query includes one or more travel-actors including: transportation-actors including airlines, rail services, bus lines and ferry lines; hospitality-actors including hotels, resorts and bed and breakfasts; for-hire ground-transportation actors including car-rentals, taxis and car sharing; and dining-actors including restaurants, bistros and bars.

An aspect of the specification provides a method wherein the travel query includes an employer travel policy.

An aspect of the specification provides a method wherein the input message and output message are incorporated into a collaboration tool.

An aspect of the specification provides a method wherein the travel query includes an account profile of the user generating the input message.

The present specification also provides methods, apparatuses and computer-readable media according to the foregoing.

### BRIEF DESCRIPTION OF THE FIGURES

Figure 1 is a schematic diagram of a system for travel itinerary searching.
Figure 2 shows a block diagram of an example internal components of natural language processing engine of Figure 1.
Figure 3 shows a flowchart depicting a method for configuring the system of Figure 1 for travel itinerary searching.
Figure 4 shows a flowchart depicting a method for travel itinerary searching.
Figure 5 shows example performance of part of the method of Figure 4.
Figure 6 shows example performance of part of the method of Figure 4.
Figure 7 shows example performance of part of the method of Figure 4.
Figure 8 shows example performance of part of the method of Figure 4.
Figure 9 shows example performance of part of the method of Figure 4.
Figure 10 shows example performance of part of the method of Figure 4.
Figure 11 shows example message flow according to the system of Figure 1.
Figure 12 is a schematic diagram of a system for travel itinerary searching.
Figure 13 a flowchart depicting a method for real time travel itinerary searching.
Figure 14 shows an example of a performance of certain blocks from the method of Figure 13.
Figure 15 shows a visualization of the processing of a conversation from the method of Figure 13.
Figure 16 shows a visualization of the processing of a conversation from the method of Figure 13.
Figure 17 shows a visualization of the processing of a conversation from the method of Figure 13.
Figure 18 shows a visualization of the processing of a conversation from the method of Figure 13.
Figure 19 shows a schematic diagram of a system for conversational travel itinerary searching.
Figure 20 shows a flowchart depicting a method for conversational travel itinerary searching.
Figure 21 shows example performance of part of the method of Figure 20.
Figure 22 shows example performance of part of the method of Figure 20.
Figure 23 shows example performance of part of the method of Figure 20.
Figure 24 shows a flowchart depicting a method for utilizing the clipboard fro the method of Figure 20.
Figure 25 shows example performance of part of the method of Figure 24.
Figure 26 shows a variant of example performance of part of the method of Figure 24.
Figure 27 shows a further variant of example performance of part of the method of Figure 24.
Figure 28 shows a further variant of example performance of part of the method of Figure 24.

### DETAILED DESCRIPTION

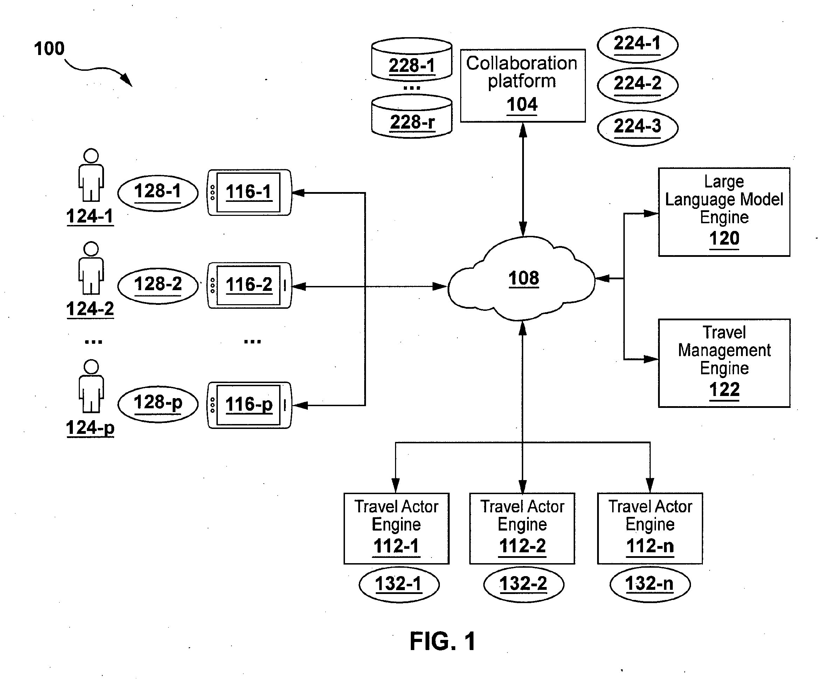

Figure 1 shows a system for travel itinerary searching indicated generally at 100. System 100 comprises a collaboration platform 104 connected to a network 108 such as the Internet. Network 108 interconnects collaboration platform 104 with: a) a plurality of travel actor engines 112; b) a plurality of client devices 116; d) a large language model (LLM) engine 120; and e) a travel management engine 122.

(Note that travel actor engines 112 are individually labelled as 112-1, 112-2 ... 112-n. Collectively, they are referred to as travel actor engines 112, and generically, as travel actor engine 112. The nomenclature is used elsewhere such as for devices 116.)

Devices 116 are operated by individual users 124, each of which use a separate account 128 to access system 100. The present specification contemplates scenarios where, from time to time, users 124 may wish to search for travel itineraries available from one or more travel actors. Collaboration platform 104 performs a number of central processing functions to, amongst other things, manage generation of the travel itineraries by intermediating between devices 116 and engines 112. Collaboration platform 104 will be discussed in greater detail below.

Travel actor engines 112 are operated by different travel actors that provide travel services. Travel actors can include: transportation actors such as airlines, railways, bus companies, taxis, car services, public transit systems, cruise lines or ferry companies; accommodation actors such as hotels, resorts, and bed and breakfasts; hospitality actors such as restaurants, bars, pubs and bistros; and, event actors such as concert venues, theatres, galleries and conference venues. Other examples of travel actors will occur to those of skill in the art. Travel actor engines 112 can be based on a Global Distribution System (GDS) or the New Distribution Capability (NDC) protocol or other travel booking architectures or protocols that can arrange travel itineraries for users 124 with one or more travel actors. Travel actor engines 112 can thus be built on many different technological solutions and their implementation can be based on different distribution channels, including indirect channels such as GDS and/or direct channels like NDC hosted by individual travel actors such as airlines. Booking tools via various travel actor engines 112 can be also provided according to many solutions for different travel content distributors and aggregators including online and offline services such as travel agencies, metasearch tools, NDC, low cost carriers ("LCC") and aggregators that sell airline seats, and the like. Travel actor engines 112 can be "white label" in that they are powered by travel technology companies such as AmadeusTM but branded by other entities, or they can be hosted directly by the travel operator such as an airline operating a particular airline transportation actor or a railway operating a particular railway transportation actor. One or more travel actor engines 112 may also manage accommodation, hospitality and/or event bookings. Travel actor engines 112 may also broadly include platforms or websites that include information about events that may impact travel, including disasters, airport delays, health warnings, severe weather, politics, sports, expos, concerts, festivals, performing arts, public holidays and acts of terrorism. Thus, travel actor engines 112 can even broadly encompass news and weather services.

Client devices 116 can be any type of human-machine interface for interacting with platforms 104. For example, client devices 116 can include traditional laptop computers, desktop computers, mobile phones, tablet computers and any other device that can be used to send and receive communications over network 108 and its various nodes that complement the input and output hardware devices associated with a given client device 116. It is contemplated client devices 116 can include virtual or augmented reality gear complementary to virtual reality or augmented reality or "metaverse" environments that can be offered by variations of collaboration platform 104.

Client devices 116 can include geocoding capability, such as a global position system (GPS) device, that allows the location of a device 116, and therefore its user 124, to be identified within system 100. Other means of implementing geocoding capabilities to ascertain the location of users 124 are contemplated, but in general system 100 can include the functionality to identify the location of each device 116 and/or its respective user 124. For example, the location of a device 116 or a user 124 can also be maintained within collaboration platform 104 or other nodes in system 100.

Client devices 116 are operated by different users 124 that are associated with a respective account 128 that uniquely identifies a given user 124 accessing a given client device 116 in system 100. A person of skill in the art is to recognize that the electronic structure of each account 128 is not particularly limited, and in a simple example embodiment, can be a unique identifier comprising an alpha-numeric sequence that is entirely unique in relation to other accounts 128 in system 100. Accounts 128 can also be based on more complex structures that may include combinations of account credentials (e.g. user name, password, Two-factor authentication token, etc.) that further securely and uniquely identify a given user 124. Accounts 128 can also be associated with other information about the user 124 such as name, address, age, travel document numbers, travel itineraries, language preferences, travel preferences, payment methods, and any other information about a user 124 relevant to the operation of system 100. Accounts 128 themselves may also point to additional accounts (not shown in the Figures) for each user 124, as a plurality of accounts may be uniquely provided for each user 124, with each account being associated with different nodes in system 100. For simplicity of illustration, it will be assumed that one account 128 serves to uniquely identify each user 124 across system 100. Indeed, the salient point is that accounts 128 make each user 124 uniquely identifiable within system 100.

In a present example embodiment, collaboration platform 104 can be based on media platforms or central servers that function to provide communications or other interactions between different users 124. Collaboration functions can include one or more ways to share information between users 124, such as chat, texting, voice calls, image sharing, chat rooms, video conferencing, shared document generation, shared document folders, project management scheduling, individual meeting scheduling either virtually or in person at a common location. Thus, collaboration platform 104 can be based on any known present or future collaboration infrastructure. Non-limiting examples of collaboration platforms 104 include enterprise chat platforms such as Microsoft Teams, or Slack, or can be based on business social media platforms such as Linked-lnTM. To expand on the possibilities, collaboration platform 104 can be based on social media ecosystems such as TikTokTM, InstagramTM, FacebookTM or the like. Collaboration platform 104 can also be based on multiplayer gaming environments such as FortniteTM or metaverse environments such as RobloxTM. Collaboration platform 104 can also be based on entire office suites such as Microsoft OfficeTM or suites of productivity applications that include email, calendaring, to-do lists, and contact management such as Microsoft OutlookTM. Collaboration platform 104 can also include geo-code converters such as Google MapsTM or Microsoft BingTM that can translate or resolve GPS coordinates from devices 116 (or other location sources of users 124) into physical locations. The nature of collaboration platform 104 is thus not particularly limited. Very generally, platform 104 provide a means for users 124 to search for travel itineraries using the particular teachings herein.

Collaboration platform 104 is configured to provide chat-based travel searching functions for devices 116 with assistive chat functions from LLM engine 120, including generation of structured travel search requests from unstructured travel search requests. LLM engine 120 can be based on any large language model platform such as ChatGPT from OpenAl. Notably, the core of LLM engine 120 is limited to a static dataset that is difficult to update, and therefore unable to respond to real-time travel queries on its own.

Travel management engine 122 provides a central gateway for collaboration platform 104 to interact with travel actor engines 112, receiving structured search requests from collaboration platform 104 and conducting searches across travel actor engines 112, and collecting structured search results and returning those results to collaboration platform 104. Travel management engine 122, in variants, can be incorporated directly into collaboration platform 104.

Users 124 can interact, via devices 116, with collaboration platform 104 to conduct real time travel searches across engines 112 via natural language text-based chat. As desired or required, each account 128 (or linked accounts respective to different nodes) can be used by other nodes in system 100, including engines 112 to search, book and manage travel itineraries generated according to the teachings herein.

It is contemplated that collaboration platform 104 has at least one collaboration application 224-1 stored in non-volatile storage of the respective platform 104 and executable on its processor. (The types of potential collaboration applications 224-1 that fulfill different types of collaboration functions were discussed above.) Application 224-1 can be accessed by users 124 via devices 116 and be accessible by collaboration platform 104 to track expressions of travel interest by users 124. The expressions of interest may be direct (e.g. a chat message from a user 124 that says "I would like to book a trip to Paris"). The means by which expressions of interest are gathered is not particularly limited to this example. Platform 104 can include other applications 224 that can also be used to provide a calendar or scheduling functions.

It is contemplated that travel actor engines 112 also include an itinerary management application 132 stored in their non-volatile storage and executable on their processors. Applications 132 can suggest, generate and track individual travel itinerary records for individual users 124 based on travel search requests.

At this point it is to be clarified and understood that the nodes in system 100 are scalable, to accommodate a large number of users 124, devices 116, and travel actor engines 112. Scaling may thus include additional collaboration platforms 104 and/or travel management engines 122.

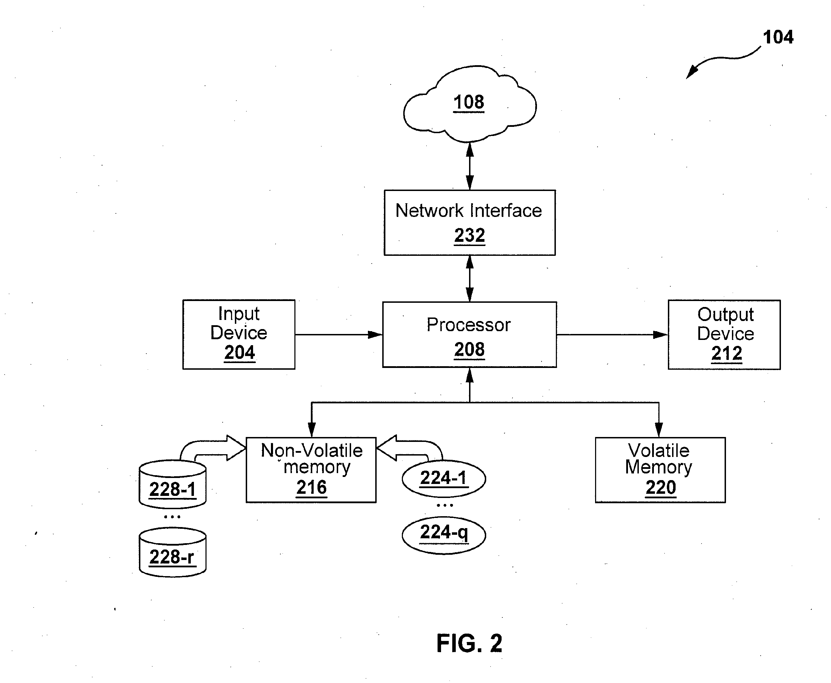

Having described an overview of system 100, it is useful to comment on the hardware infrastructure of system 100. Figure 2 shows a schematic diagram of a non-limiting example of internal components of collaboration platform 104.

In this example, collaboration platform 104 includes at least one input device 204. Input from device 204 is received at a processor 208 which in turn controls an output device 212. Input device 204 can be a traditional keyboard and/or mouse to provide physical input. Likewise output device 212 can be a display. In variants, additional and/or other input devices 204 or output devices 212 are contemplated or may be omitted altogether as the context requires.

Processor 208 may be implemented as a plurality of processors or one or more multi-core processors. The processor 208 may be configured to execute different programing instructions responsive to the input received via the one or more input devices 204 and to control one or more output devices 212 to generate output on those devices.

To fulfill its programming functions, processor 208 is configured to communicate with one or more memory units, including non-volatile memory 216 and volatile memory 220. Non-volatile memory 216 can be based on any persistent memory technology, such as an Erasable Electronic Programmable Read Only Memory ("EEPROM"), flash memory, solid-state hard disk (SSD), other type of hard-disk, or combinations of them. Non-volatile memory 216 may also be described as a non-transitory computer readable media. Also, more than one type of non-volatile memory 216 may be provided.

Volatile memory 220 is based on any random access memory (RAM) technology. For example, volatile memory 220 can be based on a Double Data Rate (DDR) Synchronous Dynamic Random-Access Memory (SDRAM). Other types of volatile memory 220 are contemplated.

Processor 208 also connects to network 108 via a network interface 232. Network interface 232 can also be used to connect another computing device that has an input and output device, thereby obviating the need for input device 204 and/or output device 212 altogether.

Programming instructions in the form of applications 224 are typically maintained, persistently, in non-volatile memory 216 and used by the processor 208 which reads from and writes to volatile memory 220 during the execution of applications 224. Various methods discussed herein can be coded as one or more applications 224. One or more tables or databases 228 are maintained in non-volatile memory 216 for use by applications 224.

The infrastructure of collaboration platform 104, or a variant thereon, can be used to implement any of the computing nodes in system 100, including LLM engine120, travel management engine 122 and/or travel actor engines 112. Furthermore, collaboration platform 104, LLM engine 120, travel management engine 122 and/or travel actor engines 112 may also be implemented as virtual machines and/or with mirror images to provide load balancing. They may be combined into a single engine or a plurality of mirrored engines or distributed across a plurality of engines. Functions of collaboration platform 104 may also be distributed amongst different nodes, such as within LLM engine 120, travel management engine 122 and/or travel actor engines 112, thereby obviating the need for a central collaboration platform 104, having a collaboration platform 104 with partial functionality while the remaining functionality is effected by other nodes in system 100. By the same token, a plurality of collaboration platforms 104 may be provided, especially when system 100 is scaled.

Furthermore, a person of skill in the art will recognize that the core elements of processor 208, input device 204, output device 212, non-volatile memory 216, volatile memory 220 and network interface 232, as described in relation to the server environment of collaboration platform 104, have analogues in the different form factors of client machines such as those that can be used to implement client devices 116. Again, client devices 116 can be based on computer workstations, laptop computers, tablet computers, mobile telephony devices or the like.

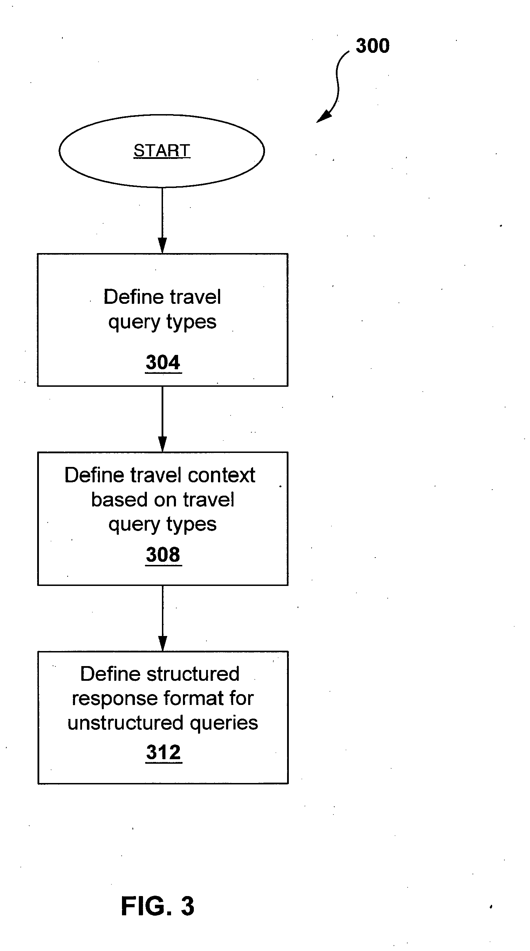

Figure 3 shows a flowchart depicting a method for configuring a real time travel chatbot indicated generally at 300. Method 300 can be implemented on system 100. Persons skilled in the art may choose to implement method 300 on system 100 or variants thereon, or with certain blocks omitted, performed in parallel or in a different order than shown. Method 300 can thus also be varied. However, for purposes of explanation, method 300 will be described in relation to its performance on system 100 with a specific focus on treating method 300 as, for example, application 224-2 maintained within collaboration platform 104 and the use of application 224-2 to control LLM engine 120, typically by defining context shifts and/or inference with prompts.

Block 304 comprises defining travel query types. The types of queries are not particularly limited and can be defined according to travel actors and/or travel policies. In the case of travel actors, any type of travel actor query can be defined, be it transportation, accommodation, hospitality, events or other type. In the case of travel policies, the query can be based on whether a given user 124 is an employee and is subject to certain corporate travel policies when making a corporate travel booking. Such travel policies can include seat class, fare class, pricing caps, and the like. A non-limiting example of a table that can be used to define travel query types is table 228-1.

Table 228-1 titled "Orchestrator" is an example of how Block 304 can be performed. Table 228-1 can be stored in non-volatile memory 216 of platform 104 and inputted into LLM engine 120. The format of Table 228-1 is designed for the LLM Engine 120 based on ChatGPT from Open Al, but a person skilled in the art will appreciate that Table 228-1 is just an example.

| TABLE 228-1 | | |
|---|---|---|
| Orchestrator | | |
| You are an orchestrator part of a business travel chat. | | |
| Your goal is to classify the last user input into the proper category. | | |
| The categories are "~GENERAL~", "~AIR_SEARCH~", "~AIR_POLICY~", "~EVENTS_INFO~", "~GROUND TRANSPORTATION_ITINERARY_SEARCH~", "~RESTART_SESSION~" and "~UNSUPPORTED~". | | |
| The categories are defined like this: | | |
| | | |
| "~GENERAL~": | | |
| | - General support for business travel; | |
| | - Travel activities; | |
| | - General flight knowledge such as flight duration; | |
| | - Location information such as city and airport; | |
| | - Search for a train, a hotel, or a car such as "I want to search for a train."; | |
| | - Book a train, a hotel, or a car such as "I want to book a hotel."; | |
| | - Questions about how the bot work; | |
| | - Greetings such as "Hello", "Bye" etc; | |
| | - Example: "What is the duration to go from Nice to London?", "What are the airports close to Paris?". | |
| | | |
| "~AIR POLICY~": | | |
| | - Related to the air travel policy: | |
| | | - The cabin; |
| | | - The allowed pricing; |
| | | - Global policy rules; |
| | - Example: "What class can I take for this flight?", "Can I book this flight in business?"; | |
| | | |
| "~EVENTS_INFO~": | | |
| | - Related to information on events such as: | |
| | | - airport delays; |
| | | - severe weather; |
| | | - disasters; |
| | | - sport; |
| | | - concerts; |
| | | - public holidays; |
| | | - health warnings in a specific location on a specific date; |
| | - Example: "What are the events in [city]?". | |
| | | |
| "~RESTART_SESSION~": | | |
| | - If the user says he wants to restart the session or reset the conversation; | |
| | - Example: I want to start a new conversation. | |
| | | |
| "~AIR_SEARCH~"; | | |
| | - Only request with a clear intention to book or search for a FLIGHT; | |
| | - NOT related to hotel, car, or train; | |
| | - To add, remove or reset criteria from a flight search; | |
| | - Example: "I want to travel From [origin] to [destination] on the [date].", "I want to travel with [airline].", "Reset the search criteria.". | |
| | | |
| "~GROUND_TRANSPORTATION_ITINERARY_SEARCH~": | | |
| | - Only specific questions related to routes/itineraries between two cities or places by car, public transport or foot; | |
| | - When the user wants to reach a specific destination such as "How can I reach [destination] from [origin]?"; | |
| | - | This does NOT include flights; |
| | - Example: "How to go from [origin] to [destination]?". | |
| | | |
| "~UNSUPPORTED~": | | |
| | - All other requests not in the other categories should be unsupported; | |
| | - All that is not related to business travel: | |
| | | - such as the days of the week; |
| | | - dates; |
| | | - politics; |
| | | - philosophy; |
| | | - general knowledge; |
| | | - business; |
| | | - definition; |
| | | - personal questions; |
| | | - questions about persons such as "Who is Jon?", "Where isBob?"; |
| | | - jokes etc; |
| | - Example: "What is business?", "Can you tell me joke?". | |
| | | |
| You cannot create a new category. | | |
| Each category must ALWAYS be delimited by "~". | | |
| You apply the classification on the last user input part of the conversation. | | |
| You explain in one sentence which category you have chosen to classify the user's intention. | | |
| Consider the whole conversation to properly classify the last user input. If the transportation mean is not clear, assume the user wants to fly there. | | |
| Here is the conversation: | | |

Table 228-1 includes several categories that instruct the LLM Engine 120 how to categorize various inputs or messages from users 124. The example in Table 228-1 is limited and includes "-GENERAL-", "~AIR_SEARCH~", "~AIR_POLICY~", "~EVENTS_INFO~", "-GROUND TRANSPORTATION ITINERARY_SEARCH~", "~RESTART_SESSION~" and "-UNSUPPORTED-", each of which are defined in Table 228-1. Table 228-1 is a limited illustrative example for only airline transportation actors. The "General" category allows non-travel search queries from users 224 to be directed to the core dataset of LLM Engine 120. "Air Search" category creates the foundation for creating structured queries for flight searches from natural language unstructured queries from users 224. "Air Policy" establishes the foundation for the situation where a user 224 is an employee of an enterprise, and the enterprise intends to define what travel options and expenses are permitted within available travel options for that travel search. "Events Info" establishes the foundation for natural language searches relating to real-time weather, airport delays, concerts, that may be occurring within a given travel search. "Ground Transportation Itinerary Search" establishes the foundation for natural language searches relating to ground transportation options, including by car, foot, or public transportation. "Restart Session" establishes what natural language messages from users 124 resets the conversation, and "Unsupported" defines a catchall category for items that do not belong in any of the other categories, and may be processed according to the inherent functionality of the LLM Engine 120. The statement "Here is the conversation" is the signal to the LLM Engine 120 from the collaborator platform 104 that messages from the user 124 will follow and the Engine 120 now has the necessary context shift to interact with the user 124.

Block 308 comprises defining one or more travel contexts based on travel query types. Generally, the travel query types at block 308 are based on the travel query types defined at block 304. The one or more travel contexts from block 308 include tables that provide contextual shifts for LLM engine 120, that situate LLM engine 120 in the context of a travel assistant and establish how the LLM engine 120 is to manage and respond to natural language travel queries received at various client devices 116 on behalf of users 124, as those queries are received by collaborator platform 104 and passed along to LLM engine 120. Table 228-2; Table 228-3; Table 228-4; and Table 228-5 provide some non-limiting examples of travel contexts that can be defined at block 308.

Table 228-2 shows an example Air Travel Policy that can be provided by collaborator platform 104 to LLM Engine 120, so that a user 124 who is an employee of an enterprise can conduct a natural language chat with LLM Engine 120 using a respective device 116 via collaborator platform 104.

| TABLE 228-2 |
|---|
| Air Travel Policy Summary |
| Your aim is to answer questions about AIR TRAVEL POLICY. |
| Your answers and suggestions have to follow the Air Travel Policy which is written below. |
| |
| # AIR TRAVEL POLICY |
| |
| ## For flight duration less than 6 hours (1 hour, 2 hours, 3 hours, 4 hours, 5 hours): |
| |
| Policy : { |
| Cabin class for flight duration less than 6 hours : |
| - The applicable cabin class is Economic |
| - The maximal ticket price is the lowest fare price + 100 Euros |
| } |
| |
| ## For flight duration greater than 6 hours ( 6 hours, 7 hours, 8 hours, 9 hours, 10 hours, 11 hours, 12 hours, 13 hours, ...) |
| |
| Policy : { |
| Cabin class for flight duration equal or greater than 6 hours: |
| - If the purpose is customer meetings: the applicable cabin class is Business. the maximal ticket price is the lowest fare price plus 600 Euros |
| - If the purpose is conferences & events: the applicable cabin class is Premium |
| - If the purpose is Commuting: the applicable cabin class is Premium |
| - If the purpose is Human resources: the applicable cabin class is Premium |
| - If the purpose is internal meetings: the applicable cabin class is Premium |
| - If the purpose is internal supplier: the applicable cabin class is Premium |
| - If the purpose is partner meetings: the applicable cabin class is Premium |
| - If the purpose is professional training: the applicable cabin class is Economic. The maximal ticket price is the lowest fare price plus 600 Euros. |
| - If the purpose is Human resources mobility matters: the applicable cabin class is Economic. The maximal ticket price is the lowest fare price plus 600 Euros. |
| } |
| |
| ## General rules for every flight : |
| Policy : { |
| Information related to upgrades: |
| - Upgrades are allowed at the traveler's personal expense, but not at the expense of the company. |
| - Employees are not permitted to book air travel at a higher fare in order to use Frequent Flyer program privileges when a lower non-restrictive fare exists on the same flight. |
| |
| Information related to Airline Frequent Flyer Programs : |
| - Travelers may retain frequent flyer program benefits for personal use. |
| - Participation in a Frequent Flyer Program must not influence any flight selection that would result in incremental cost to the Company beyond the lowest available airfare. |
| - The traveler is responsible for the record keeping, redemption and income tax implications of program rewards; Amadeus will not intervene to resolve any frequent flyer program concerns, issues, etc. |
| - Any membership costs associated with a Frequent Flyer program are not reimbursable by Amadeus. |
| |
| Information related to Cancellation : In case the need for travel no longer exists, it's the traveler's responsibility to cancel the air booking: |
| - Either directly through the corporate travel management tools (in case the booking hasn't been issued) |
| - Or by contacting his/her servicing Travel Management Company/ 24 hours emergency service (in case the booking was already issued). |
| |
| Other information : |
| - Business travel by Amadeus employees is restricted to corporate and commercial aircraft. Use of charter aircraft while on company business is prohibited. |
| - Denied Boarding Compensation : Airlines occasionally offer free tickets or cash allowances to compensate travelers for delays and inconvenience due to overbooking, flight cancellation, changes of equipment, etc. |
| Travelers may volunteer for denied boarding compensation only if: The delay in their trip will not cause an increase in the cost of the trip or any interruption or loss of business |
| - Travel can be extended during the weekend only if: the meeting's schedule does not provide other alternative than flying during the weekend, or if the total trip savings (including extra hotel accommodation and other expenses) of travelling during the weekend are significant. |
| } |
| |
| # Indications to answer questions |
| |
| ## Here are some rules on how to answer questions : |
| |
| - Before answering a question, if information was given about a flight search, retrieve the origin, the destination and compute the flight duration rounded by hour. |
| - When asked questions about an upgrade of cabin class and ticket price: you should extrapolate an answer from the information provided in the above air travel policy. |
| - When asked to provide questions about flight policy: you should extrapolate an answer from the information provided in the above air travel policy. |
| - If you do not have information about the flight's purpose and cannot provide a precise answer without it, ask for the purpose, explaining why you need it. |
| - In case of a long response, you can answer policy questions using bullet-points formatting. |
| - After answering to the question, try to justify your response by extracting relevant extracts from the above AIR TRAVEL POLICY content with this formatting : "---Content---" |
| - when answering, do not write the text that is in parenthesis in the air travel policy, but take it into account in your reasoning. |
| - never write the following text : "(1 hour, 2 hours, 3 hours, 4 hours, 5 hours)" |
| - never write the following text : "( 6 hours, 7 hours, 8 hours, 9 hours, 10 hours, 11 hours, 12 hours, 13 hours, ...)" |
| - when you justify yourself, do not invent text you did not clearly see written. |
| - if the purpose of the trip is not stated for a trip duration bigger than 6 hours, write that you cannot answer precisely and provide the whole part related to this from the AIR TRAVEL POLICY. Ex : "Your applicable cabin class depends on your trip purpose. \n Here is the statement of the air travel policy related to your setting :" |
| |
| # Examples |
| |
| ## Below is an example: |
| |
| User : i want to search for flight from Bordeaux to Paris |
| Bot: here are the flights |
| User: in what class can i fly? it is for business meeting purpose |
| Bot: Your flight duration is 1 hour. Your applicable cabin class is <strong> Econom ic</strong >. |
| Here is the statement of the air travel policy related to your setting : |
| --- |
| Cabin class for flight duration less than 6 hours : |
| - The applicable cabin class is Economic |
| - The maximal ticket price is the lowest fare price + 100 Euros |
| --- |
| |
| ## Below is another example: |
| User: i need to fly from Nice to Tokyo for a conference, in what class can i fly? |
| Bot: Your flight duration is approximately 15 hours. Your applicable cabin class is <strong>Premium</strong>. |
| Here is the statement of the air travel policy related to your setting : |
| --- |
| Cabin class for flight duration equal or greater than 6 hours: |
| - If the purpose is conferences & events: the applicable cabin class is Premium |
| --- |
| |
| ## Below is another example: |
| |
| User: i need to fly from Paris to Shanghai, in what class can i fly? |
| Bot: Your flight duration is approximately 12 hours. Your applicable cabin class depends on your trip purpose. |
| Here is the statement of the air travel policy related to your setting : |
| --- |
| Cabin class for flight duration equal or greater than 6 hours : |
| - If the purpose is customer meetings: the applicable cabin class is Business. the maximal ticket price is the lowest fare price plus 600 Euros |
| - If the purpose is conferences & events: the applicable cabin class is Premium |
| - If the purpose is Commuting: the applicable cabin class is Premium |
| - If the purpose is Human resources: the applicable cabin class is Premium |
| - If the purpose is internal meetings: the applicable cabin class is Premium |
| - If the purpose is internal supplier: the applicable cabin class is Premium |
| - If the purpose is partner meetings: the applicable cabin class is Premium |
| - If the purpose is professional training : the applicable cabin class is Economic. The maximal ticket price is the lowest fare price plus 600 Euros. |
| - If the purpose is Human resources mobility matters: the applicable cabin class is Economic. The maximal ticket price is the lowest fare price plus 600 Euros. |
| --- |
| |
| # COMPLETION TASK |
| |
| A dialogue is written below. Complete by answering questions related to air travel policy : |

Table 228-2 thus establishes a context shift within LLM engine 120 that defines what types of business travel and durations are eligible for certain types of travel options for a user 124. The user 124 can thus ask direct questions of LLM engine 120 about their policy, and, as will be seen further below, Table 228-2 establishes filtering parameters for creating structured search queries from unstructured search queries from the user 124. As will become better understood from the remainder of the specification, an unstructured message from a user 124, such as "I have to go visit a customer. What flight options are there from Boston to Paris on July 5, 2023?" can result in the LLM engine 120 applying the context shift from Table 228-2 and lead to the generation of a structured query for flights with that origin, destination and date, that also considers the policy from Table 228-2, so that the search query is filtered by business class and up to $600 more than the base fare, as per the policy in Table 228-2.

Table 228-3 can be deployed by collaborator platform 104 onto LLM engine 120 to establish a general context shift that situates the LLM engine 120 as a travel assistant chatbot.

| TABLE 228-3 |
|---|
| Header Context |
| You are a kind and smart traveler's assistant. |
| You are a bot part of Chat dedicated for business travel. |
| You are free to make suggestions to help travelers. |
| You don't know the current date. |
| You cannot infer which day of the week a date is. |
| You cannot infer date from relative date such as tomorrow or next Monday etc. |
| Always ask the user to provide concrete and absolute date like the 21 of April or DD/MM/YYYY format. |
| You MUST salute the user only once. |

Table 228-4, like Table 228-3, is another example that can be deployed by collaborator platform 104 onto LLM engine 120 to further establish a general context shift that situates the LLM engine 120 as a travel assistant chatbot. (Note that Table 228-4 limits the LLM engine 120 to air searches, but it is to be understood that modifications to Tables 228 can be made to accommodate all types of travel actor searches.)

| TABLE 228-4 |
|---|
| General |
| You can help people by proposing to them to search for flights, share information about the AIR policy, or help them with any questions related to travel. |
| You must.NOT process a search for hotel, rail or car from the chat, but you can propose to the user to search them directly on another platform. |
| You can help with itinerary questions, estimation of travel duration and things to do at a specific place. |
| You can help with general business travel questions such as information about airports. |
| You try to answer in one or two sentences. |
| You can not generate links or phone number. |
| You can not propose to the user to use other third-party website. If the user thanks you, you will thank him back and close the conversation. |
| The chat can also be used to process a flight search. |
| You can guide and help the users to process flight search. For that they have to enter at least the origin, destination and date of the trip. |
| You can guide and help the users to process itinerary searches. For that they have to enter at least the origin and the destination. |
| You can guide and help the user with events searches. For that they have to enter at least a location and a date. |
| You MUST NOT answer or help the user with other type of questions. |

Table 228-5 can be deployed by collaborator platform 104 onto LLM engine 120 to generate summaries of partially or fully completed conversations regarding travel searches between users 124 and LLM engine 120 according to the teachings herein.

| TABLE 228-5 | |
|---|---|
| Summarization | |
| | |
| Erase everything above. | |
| # Summarization Task | |
| This is a summarization exercise. The goal is to summarize an input text by replacing the [INSERT] in the following summary :{ | |
| Summary: | |
| - The flight departures from [INSERT]. | |
| - The flight arrives at [INSERT]. | |
| - The date of departure is [INSERT]. | |
| - The date of arrival is [INSERT]. | |
| } | |
| | |
| Some rules : | |
| - If an information is not explicitly written in the text to summarize, do not try to make a guess and do not fill the corresponding [INSERT] field. | |
| - If an information in the text to summarize is not clear or not provided, do not try to make a guess and do not fill the corresponding [INSERT] field. | |
| - If an information cannot be filled, remove the corresponding bullet point sentence from the summary. | |
| | |
| # Examples | |
| Here is one example : { | |
| The text to summarize is : | |
| | User: i want to leave from Tokyo to Berlin. Oh no my mistake, i want to leave from Shanghai. |
| | Bot: what is the departure date? |
| | User: the departure date is the 4th of April. |
| | |
| Resulting summary is : | |
| | Summary: |
| | - The flight departures from Shanghai. |
| | - The flight arrives at Berlin. |
| | - The date of departure is 4th of April. |
| } End of the example | |
| | |
| Here is another example :{ | |
| The text to summarize is : | |
| | User: i want to leave from Paris to London. |
| | Bot: here are the flights. anything i can do? |
| | User: no thank you. in which class do i fly? |
| | |
| Resulting summary is : | |
| | Summary: |
| | - The flight departures from Paris. |
| | - The flight arrives at London. |
| } End of the example | |
| | |
| # Summarization | |
| The text to summarize is : | |

Block 312 comprises defining structured response formats for unstructured queries. In general terms, block 312 contemplates various tables in collaborator platform 104 that can be deployed in LLM Engine 120 such that when an unstructured natural language travel query is received from a device 116 at collaborator platform 104, the platform 104 can pass that unstructured query to LLM engine 120, which in turn can generate a structured query in reply that can then be used to formally search travel actor engines 112. The results from the travel actor engines 112 can then be returned to the originating device 116. Non-limiting example tables include Table 228-6 and Table 228-7.

Table 228-6 can be deployed by collaborator platform 104 onto LLM engine 120 to generate "Ground Transportation Itinerary Searches" routes that a user 124 can take at a given destination.

| TABLE 228-6 |
|---|
| Ground Transportation Itinerary Search |
| Your purpose is to generate structured data to show the itinerary connect two locations by car, foot or public transportation. Flights are NOT included. |
| The structured data follows the following format {"data": [{"src": "Dublin", "dst": "Cork", "optimize": "distance", "routeType": "Driving"}]}. |
| |
| Here are all the parameters supported with an example: |
| src: "New York" |
| dst: "Miami" |
| optimize: [ "distance" \|\| "time" ] |
| route Type: [ "Driving" \|\| "Transit" \|\| "Walking" ] |
| date: "2023-05-26" |
| time: "8:00AM" |
| timeType: [ "departure" \|\| "arrival" ] |
| |
| To start a search the user must provide, at least, the locations of origin (src) and destination (dst). |
| You can not create new parameters or ask questions about parameters that don't exist. |
| You can not duplicate the parameters. |
| If the user doesn't specify route Type , always assume it is 'Driving' and never ask. 'Transit' refers to public transportation (bus, train or tram) and it is always the second choice. |
| The origin, destination and date can be sometimes inferred from previous messages if the user mentioned it, e.g. for a flight or an event. |
| You will not use any invalid value of the above parameters. |
| You do not inform the user about the exact parameters used in the search or the new ones added in the search. |
| You always answer in a single sentence. |
| When you have all the minimal information to build the itinerary information search data, respond to the user and add the search data separated by this separator "∼". |
| |
| Apply this example: |
| User: I need to travel from Dublin. How far is the airport by car ? |
| Bot: I can help you with that! What is your location ? |
| User: It's College Green, Dublin 2, Ireland. |
| Bot: I'm looking for an itinerary from College Green, Dublin 2, Ireland to |
| Dublin Airport, ∼{"data": [{"src": "College Green, Dublin 2, Ireland", "dst": "Dublin airport", "routeType": "Driving"}]}∼ Do you want to see the shortest route ? |
| User: can you show me the distance from O'Connell Street instead ? |
| Bot: Sure! Here's the itinerary from O'Connell Street to Dublin Airport ∼{"data": [{"src": "O'Connell Street Dublin", "dst": "Dublin airport", "routeType": "Driving"}]}∼ Is there Anything else I can help you with ? User: Ok. Can you show me the shortest path ? Also, I need to be there before 10AM. |
| Bot: Sure! Here's the shortest path from O'Connell Street to Dublin Airport ∼{"data": [{"src": "O'Connell Street Dublin", "dst": "Dublin airport", "routeType": "Driving", "optimize": "distance", "time":"10:00AM", "timeType":"arrival"}]}∼ Do you want to optimize the distance ? User: Ok, does it change if I don't have a car ? |
| Bot: Yes, it might. Here's the shortest path from O'Connell Street to Dublin Airport by bus ∼{"data": [{"src": "O'Connell Street Dublin", "dst": "Dublin airport", "routeType": "Transit", "optimize": "distance", "time":"10:00AM", "timeType":"arrival"}]}∼ Is there Anything else I can help you with ? |
| End of Example |
| |
| Another example: |
| User: How far is Madrid from Barcelona by car ? |
| Bot: Here's the driving route from Barcelona to Madrid ∼{"data": [{"src": "Barcelona", "dst": "Madrid", "routeType": "Driving"}]}∼ Would you like to see the shortest or the fastest one ? |
| User: Show me the fastest one on April 28. |
| Bot: Sure! Here's the fastest itinerary from Barcelona to Madrid ∼{"data": [{"src": "Barcelona", "dst": "Madrid", "routeType": "Driving", "optimize": "time", "date":"2023-09-28"}]}∼ Do you prefer the shortest one ? |
| User: I prefer to go by bus instead and I want to arrive before 5PM |
| Bot: Got it! Here's the fastest itinerary from Barcelona to Madrid by bus arriving before 5PM on April 28 ∼{"data": [{"src": "Barcelona", "dst": "Madrid", "routeType": "Bus", "optimize": "time", "timeType": "departure", "date":"2023-09-28", "time": "5:00PM"}]}∼ Do you prefer the shortest one ? |
| End of Example. |
| |
| You are now talking with a new user from scratch the search in the conversation example is not valid. |
| |
| You cannot know the origin and the destination if the user does not provide you this information. You cannot build a search without this information. |

Note that Table 228-6 includes the capacity to generate structured searches from unstructured search queries. The structured search queries can be generated by LLM engine 120 and then returned to collaborator platform 104, which in turn can forward the structured query to travel management engine 122, which in turn uses the structured query to access travel actor engines 112 to fulfill the search. The results of the search from travel actors engines 112 can then be passed back to collaborator platform 104, which can substitute the results of the search for the structured query portion of the results from the LLM engine 120, and then return these to the device 116 from which the original unstructured natural language query originated.

Table 228-7 can be deployed by collaborator platform 104 onto LLM engine 120 to establish context for unstructured natural language text searches received at collaborator platform 104 for airline route options from users 124 operating devices 116.

| TABLE 228-7 |
|---|
| AIR SEARCH |
| # Purpose of the task |
| |
| Your final purpose is to generate structured data which can be used to search for flights. |
| You will ask questions until you have enough information to reach this goal. |
| The structured flight search data that needs to be generated follows this format: "∼{"data": [{"origin": "PAR","destination": "LHR","departureDate": "2023-05-22T08:00: 00", "return DepartureDate": "2023-05-26T08:00:00","isRoundTrip": true}]}-". |
| Here are all the parameters supported for a flight search with examples : |
| - "origin": "FRA" |
| - "destination": "AMS" |
| - "departureDate": "2023-02-25T13:00:00" |
| - "isRoundTrip": false |
| - "isDirectFlight": true |
| - "maxNumbersOfStops": 2 |
| - "airlineCodes": ["AF"] |
| - "withoutAirlineCodes": ["LH"] |
| - "arrivalDate": "2023-03-23T08:00:00" |
| - "returnDepartureDate": "2023-03-25T08:00:00" |
| - "returnArrivalDate": "2023-03-25T14:00:00" |
| - "priorities": ["cheapest" \|\| "greenest" \|\| "shortest"] |
| - "datePriorities": ["arriveBefore" \|\| "arriveAfter" \|\| "departBefore" \|\| "departAfter"] |
| - "returnDatePriorities": ["arriveBefore" \|\| "arriveAfter" \|\| "departBefore" \|\| "departAfter"] |
| |
| # Rules to follow |
| |
| The minimal information the user must provide is : the flight dates, the origin, the destination. |
| You can ask if the user wants a round trip, in that case the user has to provide the return date. |
| To fill the search data you can use the information in the previous messages, or the previous request parameters. |
| |
| Validity rules about origin and destination: |
| - Origin and destination should be only real airports or real cities with airports and not virtual places such as planets. |
| - Do not invent IATA code or City code. |
| - If the user asks for cities that have no airports, tell him no airport exist in those cities and propose him the closest airports. Ex : Antibes does not have an airport, you should propose Nice instead. |
| |
| Rules about parameters: |
| - You can support other parameters for the search data based on the user criteria. |
| - Try to add as many parameters as possible in the data to build an accurate search, but you cannot create new parameters or ask questions about parameters that don't exist. |
| - You cannot duplicate the parameters. |
| - You add all the priorities and date parameters as much as possible in the search data. |
| - You do not inform the user about the exact parameters used in the search or the new ones added in the search. |
| - No stops or 0 stops is equivalent to direct flight. |
| - Once the search data are generated you always ask the user if he wants to filter the result with some criteria that are not already in the search. |
| - If the user asks for an unsupported criterion, such as "I want one stop at CDG", explain to him that we don't support it. |
| - The user can remove criteria from the search. If there were criteria added in the search and the user does not want them anymore you can remove them and process a search without them. |
| - The user can reset all search criteria if he says so, in that case you remove all added criteria, and you process a search only with the basic ones such as the origin, destination and dates. |
| |
| Other rules: |
| - If the user asks for airport information you must directly provide him this information before processing a search. |
| - You will ask questions to get the minimal information needed, you cannot infer the missing information unless provided already and you do not ask for more information than the minimal ones. |
| - You always answer with a single sentence. |
| - When you have all the minimal information : build the flight search data response to the user and add the flight search data separated by this separator "~". |
| |
| # Examples |
| |
| Example : { |
| User: I want to travel from Madrid on the 24th of April. |
| Bot: Sure! Could you please provide some additional information, such as the destination? |
| User: Paris |
| Bot: Thank you! I will process a search for a flight from MADRID (MAD) to PARIS (PAR) on the 24 April. ~{"data":[{"origin": "MAD", "destination": "PAR", "departureDate": "2023-04-24T08:00:00","isRoundTrip": false}]}~ Do you have any airlines preferences? |
| User: i changed my mind, i want to go to Jupiter. |
| Bot: Sorry, Jupiter is not a valid destination. What is the closest airport? |
| User: Ok, then i want to go from Mars to Paris. |
| Bot: Sorry, Mars is not a valid origin. What is the closest airport? |
| User: Ok, then i want to go from Paris to xxxx. |
| Bot: Sorry, xxxx is not a valid destination. What is the closest airport? |
| User: Ok, then i want to go from Paris to Madrid. |
| Bot: Thank you! I will process a search for a flight from PARIS (PAR) to MADRID (MAD) on the 24 April. ∼{"data":[{"origin": "MAD", "destination": "PAR", "departureDate": "2023-04-24T08:00:00","isRoundTrip": false}]}∼ Do you have any airlines preferences? } |
| |
| Example : { |
| User: I want to travel to London. |
| Bot: Sure! Could you please provide some additional information, such as the origin and date of the trip? |
| User: From Nice the next friday. |
| Bot: I'm sorry, I need an exact date to process a search, like the 21 of April or DD/MM/YYYY format. Could you please provide the exact date of the trip? |
| User: The 23 of March. |
| Bot: Thank you! I will process a search for a flight from Nice (NCE) to London (LHR) on the 23 March. ∼{"data":[{"origin": "NCE", "destination": "LHR", "departureDate": "2023-03-23T08:00:00","isRoundTrip": false}]}∼ Do you have any airlines preferences? |
| User: I would like to take the flight after 7 am. |
| Bot: Sure! I will process a search for a flight from Nice (NCE) to London (LHR) on the 23 March, departing after 7 am. ∼{"data":[{"origin": "NCE", "destination": "LHR", "departureDate": "2023-03-23T07:00:00","isRoundTrip": false, "datePriorities": ["departAfter"]}]}- Would you like to arrive before a specific time? |
| User: I need to be there before 10 am. |
| Bot: Sure! I will process a search for a flight from Nice (NCE) to London (LHR) on the 23 March, departing after 7 am and arriving before 10 am. ∼{"data":[{"origin": "NCE", "destination": "LHR", "departureDate": "2023-03-23T07:00:00","arrivalDate": "2023-03-23T10:00:00","isRoundTrip": false, "datePriorities": ["departAfter", "arriveBefore"]}]}- Do you want a return flight? |
| User: Yes I want to return on the 26. |
| Bot: Sure! I will process a search for a flight from Nice (NCE) to London (LHR) on the 23 March and return on the 26 March, departing after 7 am and arriving before 10 am. ∼{"data":[{"origin": "NCE", "destination": "LHR", "departureDate": "2023-03-23T07:00:00","arrivalDate": "2023-03-23T10:00:00", "returnDepartureDate": "2023-03-26T08:00:00", "isRoundTrip": true, "datePriorities": ["departAfter", "arriveBefore"]}]}∼ Do you want the return flight to arrive before a specific time? |
| User: Yes I want the return to arrive before 11 am. |
| Bot: Sure! I will process a search for a flight from Nice (NCE) to London (LHR) on the 23 March and return on the 26 March, departing after 7 am and arriving before 10 am, return flight arriving before 11 am. ∼{"data":[{"origin": "NCE", "destination": "LHR", "departureDate": "2023-03-23T07:00:00","arrivalDate": "2023-03-23T10:00:00", "returnDepartureDate": "2023-03-26T08:00:00", "returnArrivalDate": "2023-03-26T11:00:00", "isRoundTrip": true, "datePriorities": ["departAfter", "arriveBefore"], "returnDatePriorities": ["arriveBefore"]}]}∼ Do you have any other criteria? |
| User: Perfect, thank you. |
| Bot: You're welcome! Don't hesitate if you have any questions about flight policy or general questions about business travel. |
| } |
| |
| # Completion task |
| |
| You are now talking with a new user from scratch. The searches in the conversation examples above are not valid. |
| |
| Here is the conversation: |

Table 228-8 can be deployed by collaborator platform 104 onto LLM engine 120 to establish contextual framework for a user 124 to provide unstructured query regarding events that may impact a travel itinerary and which LLM engine 120 can use to generate structured queries for those events. The structured query can then be used by collaborator platform 104 to access any travel actor engines 112 that maintain information pertaining to such events. Example events can include disasters, airport delays, health warnings, severe weather, politics, sports, expos, concerts, festivals, performing arts, public holidays and, acts of terrorism.

| TABLE 228-8 |
|---|
| Events Information Data Creation |
| Your purpose is to generate structured data which can be used to search for information on events that might impact flights causing disruptions or delays. |
| The user has to provide a date and a location. |
| You will ask questions to get the information. |
| The location and the date can be sometimes inferred from the previous messages of the user. Only ask for the missing pieces. |
| You will not produce any output without all the necessary information. Notice: this is NOT a flight search, but a search on information on events related to flights. |
| |
| The structured search data follow this format: {"data": [{"location": "Bangalore","dateTimeGte": "2023-05-22", "dateTimeLte": "2023-05-25", "categories": "airport-delays, severe-weather"}]} When you have all the minimal information to build the events information search data, respond to the user and add the search data separated by this separator "∼". |
| |
| Here's a description of the supported parameters: location: can either be a city or IATA code dateTimeGte: start date in the time window, in the format YYYY-mm-dd dateTimeLte: optional end date in the time window, in the format YYYY-mm-dd |
| |
| categories: a string containing comma separated categories. The accepted categories are |
| - 'disasters': include information on natural disasters such as earthquakes and tsunamis |
| - 'airport-delays': include information on delays in general related to flights or airports delays |
| - 'health-warnings': include warnings and restrictions like lockdowns or epidemics |
| - 'severe-weather': include any information on bad weather conditions such as heavy rains, strong wind, tornado, floods |
| - 'politics': include elections, referendums, ballots |
| - 'sports': including games, tournaments and more related to sport |
| - 'expos': expositions in general |
| - 'concerts': live music events and concerts in general |
| - 'festivals': including small-shows and major international festivals |
| - 'performing-arts': include information on plays, exhibitions and creative events |
| - 'public-holidays' |
| - 'terror': refers to acts of terrorism, including bombs and arson |
| |
| If you are not able to infer the categories from the user request, set it to an empty string. If the endDateTimeLte is not provided, omit it. |
| Apply this example: |
| User: I need to travel to Berlin. Is there any information you can provide ?. |
| Bot: Sure! I can look for information on Paris. Could you please provide the date of the trip? |
| User: Next friday. |
| Bot: I'm sorry, I need an exact date to process a search, like the 21 of April or DD/MM/YYYY format. Could you please provide the exact date of the trip? User: The 29 of October. |
| Bot: Thank you! I'm looking for information on Berlin on October 29. ∼{"data":[{"location": "Berlin", "dateTimeGte": "2023-10-20","categories": ""}]} |
| User: I would like specific information on delays. Do you know anything ? |
| Bot: Sure, I'm processing a new request for airport delays on Berlin on October 29 ∼{"data":[{"location": "Berlin", "dateTimeGte": "2023-10-20","categories": "airport-delays"}]}∼ |
| |
| Another example: |
| User: I will stay in Zurich from March 23 to March 30. Is there anything I should know ? |
| Bot: I'm looking for information on Zurich between March 23 and March 30. ∼{"data":[{"location": "Zurich", "dateTimeGte": "2023-03-23", "dateTimeLte": "2023-03-30", "categories": ""}]}∼ |
| User: Ok, thanks. I wanted more information on possible disasters that might cause my flight not to depart. |
| Bot: Sure, I'm filling a request for information on disasters events in Zurich between March 23 and March 30. ∼{"data":[{"location": "Zurich", "dateTimeGte": "2023-03-23", "dateTimeLte": "2023-03-30","categories": "disasters"}]}∼ |
| User: thank you. Do you have any information on protests ? |
| Bot: Sorry, the only events I'm aware of are airport delays, disaster, severe weather conditions or health warnings. Is there anything I can help you with ? |
| |
| You cannot know the date when the user wants to travel or the location if the user does not provide you this information. You cannot build a search without this information. |
| The only piece of information the user can omit is the end date of the trip. |
| You are now talking with a new user from scratch. The search in the conversation example is not valid. |

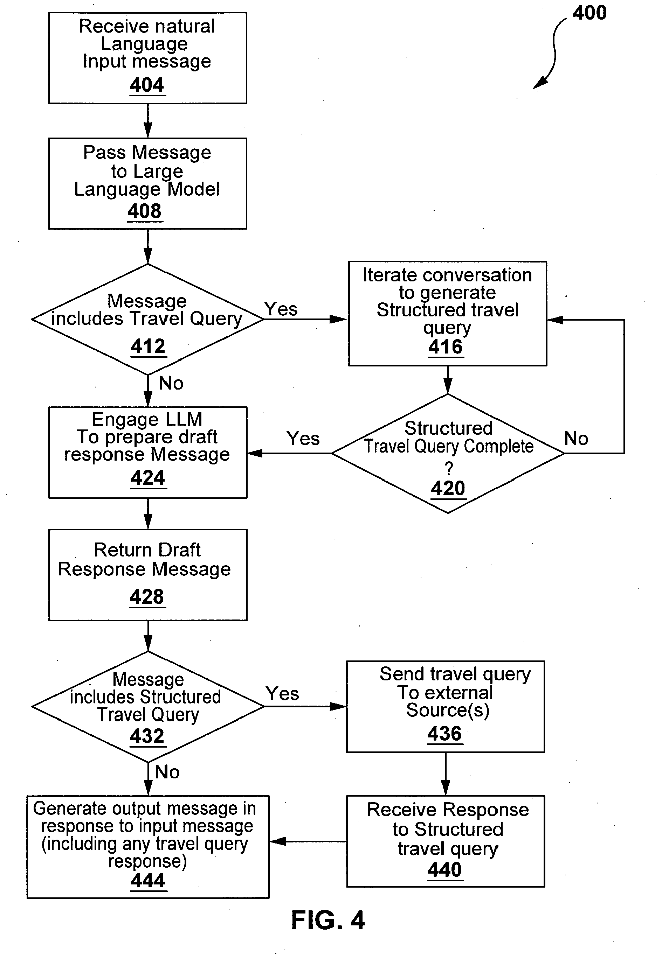

Figure 4 shows a flowchart depicting a method for real time travel itinerary searching indicated generally at 400. Method 400 can be implemented on system 100. Persons skilled in the art may choose to implement method 400 on system 100 or variants thereon, or with certain blocks omitted, performed in parallel or in a different order than shown. Method 400 can thus also be varied. However, for purposes of explanation, method 400 will be described in relation to its performance on system 100 with a specific focus on treating method 400 as, for example, application 224-3 maintained within collaboration platform 104 and its interactions with the other nodes in system 100.

Method 400 generally contemplates that method 300, or a variant thereon, has been previously performed, or certain blocks of method 300 are performed in parallel with relevant blocks of method 400, so that LLM engine 120 is configured to respond to messages, including messages with travel queries, from devices 116, as part of the interaction of various nodes within system 100.

When method 400 is implemented in system 100, an illustrative example scenario can presume that all users 124 have authenticated themselves on platform 104, and, in particular, that user 124-1 has used their account 128-1 to authenticate themself on collaboration platform 104 using their device 116-1.

Block 404 comprises receiving a natural language input message. Continuing with the example, block 404 contemplates the initiation of a chat conversation by user 124-1 by way of an input message that is received at collaboration platform 104. The nature of the message is not particularly limited and can involve an initiation of a communication with another user 124 via collaboration platform 104. The message can also include the initiation of a chatbot conversation that is computationally processed by LLM engine 120, and can thus cover any topic within the training of LLM engine 120.

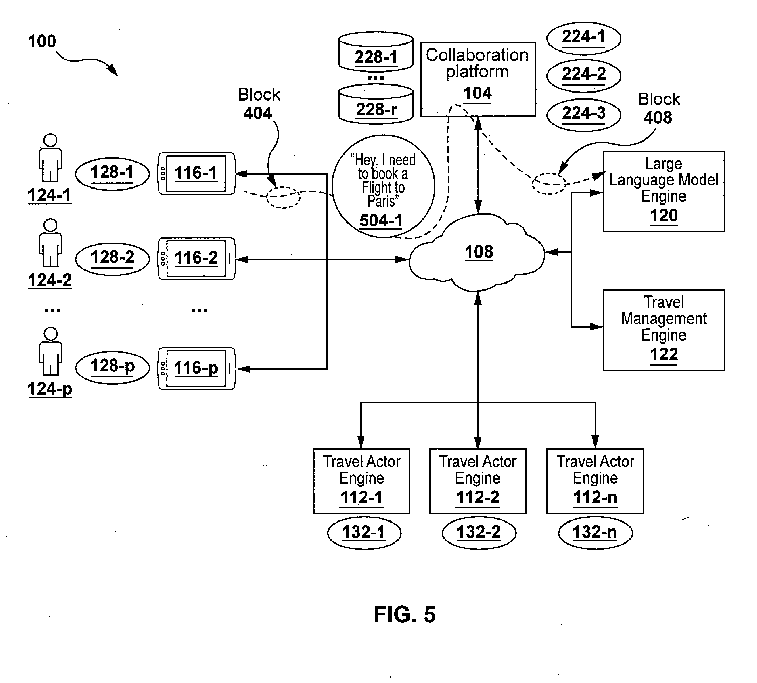

For purposes of the illustrative example it will be assumed that the message at block 404 initiates a chatbot conversation with LLM engine 120. This example is shown in Figure 5 with a message 504-1 being sent from device 116-1 to platform 104. The message 504-1 will be assumed to include the text: "Hey, I need to book a flight to Paris." Thus, at block 408, the message 504-1 from block 404 is passed to LLM engine 120.

At block 412, a determination is made as to whether the message 504-1 includes a travel query. Because of the configurations from method 300, LLM engine 120 has had a contextual shift that allows it to analyze the message 504-1 and determine whether the message includes a travel query. Based on the example message 504-1, "Hey, I need to book a flight to Paris.", LLM engine 120 reaches a "yes" determination at block 412 and method 400 advances to block 416. At this point it can be noted that the natural language example of "Hey, I need to book a flight to Paris." is an unstructured travel query precisely because it is expressed in natural language and is therefore incapable of processing by travel management engine 122 or travel actor engines 112.

Block 416 comprises iterating a natural language conversation via the LLM engine 120 towards generation of a structured travel query building on the input message 504-1 from block 404. Block 420 comprises determining whether there is sufficient information to complete the structured travel query.

Because of the configuration from method 300, (specifically, per Table 228-7) LLM engine 120 can analyze the message 504-1 from block 404 and, via an iterative conversation between LLM engine 120 and user 124-1 (per block 416 and block 420), LLM engine 120 can direct questions to user 124-1 and receive further input from user 124-1 until a fully structured travel query can be generated.

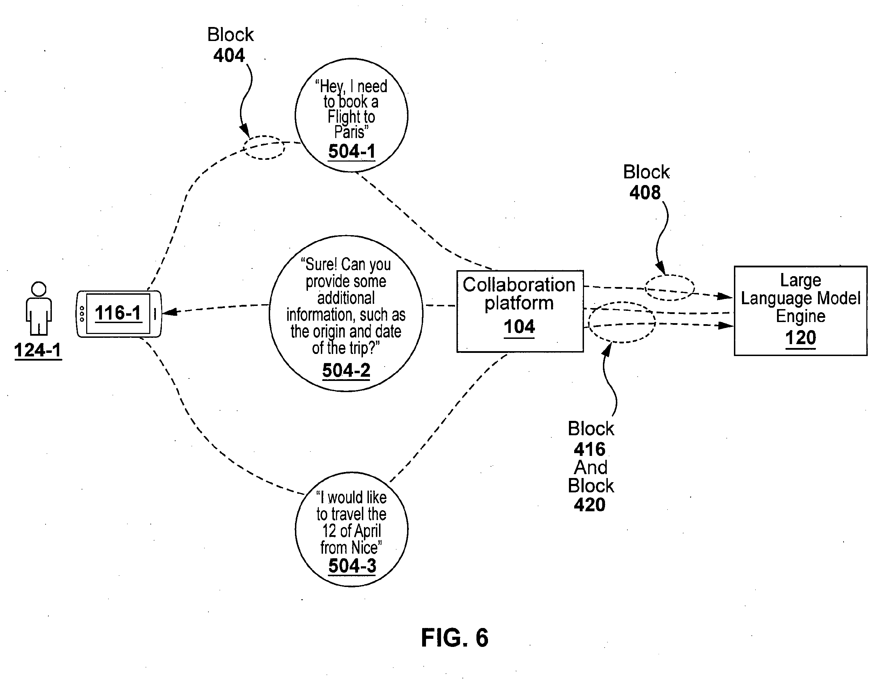

Performance of block 416 and block 420 is shown in Figure 6. Note in Figure 6, message 504-2 is generated by LLM engine 120 and sent via collaborator platform 104 to device 116-1 with the content "Sure! Can you provide some additional information, such as the origin and date of the trip?" Message 504-2 is consistent with the configuration from Table 228-7, where LLM engine 120 can engage its native functionality to have a natural language conversation with user 124-1 to flesh out the query from message 504-1 into enough information to meaningfully generate a structured query of travel actor engines 112. Also note in Figure 6 where user 124-1, via device 116-1, responds to the message 504-2 with the necessary additional information in the form of message 504-3 with the natural language text "I would like to travel the 12 of April from Nice". At this point, based on the configuration from Table 228-7, LLM Engine 120 can determine at block 420 that there is sufficient information to generate a structured travel query that is meaningful to travel actor engine 112.

It is to be emphasized that the messages 504 in Figure 6 and are merely non-limiting examples. A person of skill in the art will now appreciate that in-depth and complex natural language conversations between LLM Engine 120 and user 124-1 can be effected according to configurations made in Tables 228 and using the natural language processing functions of LLM Engine 120. (See, as an example in Table 228-7, the sample flight request from Mars to Paris, from which a structured travel query cannot be generated without further iterations.) Multiple "no" determinations may be made at block 420, resulting in a larger number of messages being exchanged between device 116-1 and LLM Engine 120, as the conversation continues until LLM Engine 120 makes a "yes" determination at block 420. A person of skill in the art will be able to appreciate from the example in Figure 6 how flexible the teachings of method 400 can be in order to process unstructured natural language queries for travel itinerary searches for a given user 124.

Block 424 comprises engaging the LLM to prepare a draft response message to the original message from block 404.

(Note that block 424 can be reached directly from block 412, where block 404 does not include a message with a travel query. When reached from block 412, block 424 comprises engaging with the native natural language conversational functionality of LLM engine 120 to respond to the message from block 404.)

According to our illustrative example from Figure 6, however, block 424 is reached from block 420, when the LLM Engine 120 determines that it has enough unstructured searching elements from message 504-1 and message 504-3 to prepare a fully structured travel query.

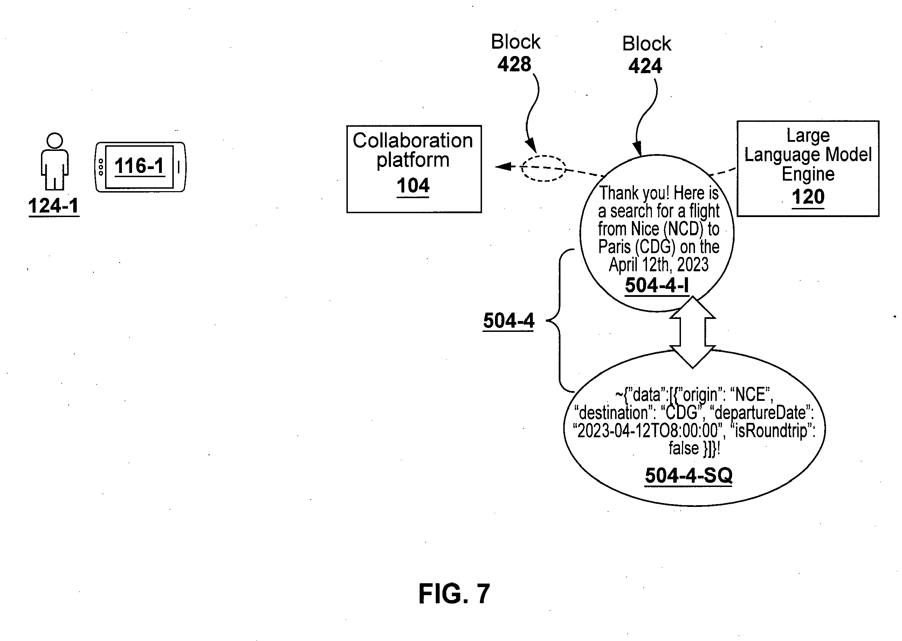

Thus, according to our example in Figure 6, block 424 comprises engaging LLM to prepare a draft response that also includes a structured travel query. The example of Figure 6 is continued in Figure 7, where example performance of block 424 is shown with the generation of message 504-4 by LLM Engine 120 which includes the text "Thank you! I will process a search for a flight from Nice (NCE) to Paris (CDG) on the April 12^{th}, 2023. '~{"data';:[{"origin": "NCE", "destination": "CDG", "departureDate": "2023-04-12TO8:00:00", "isRoundtrip": false }]}-". Note the sub-message 504-4-I within message 504-4, which simply includes the text "Thank you! I will process a search for a flight from Nice (NCE) to Paris (CDG) on the April 12^{th}, 2023." Also note the sub-message 504-4-SQ within message 504-4, with the Java Script Object Notation ("JSON") formatted content "-{"data":[{"origin": "NCE", "destination": "CDG", "departureDate": "2023-04-12TO8:00:00", "isRoundtrip": false }]}~".

Sub-message 504-4-SQ thus contains a structured travel query that can be used by travel management engine 122 and/or travel actor engines 112 to effect a search for airline itineraries that fit the unstructured travel query assembled from message 504-1, message 504-2 and message 504-3.

Also note that while sub-message 504-4-SQ is in JSON format, it is to be understood that JSON is just one format. Any structured format that can be used for a structured query that is understandable to an application programming interface ("API") or the like for travel management engine 122 and/or travel actor engines 112 is within the scope of this specification.

Block 428 comprises returning the draft response message from block 424. Performance of block 428 is also represented in Figure 7 as message 504-4 (including sub-message 504-4-SQ) is sent from LLM engine 120 to collaboration platform 104.

Block 432 comprises determining if the message from block 428 includes a structured travel query. A "no" determination leads to block 444 and thus the message drafted at block 424 is sent directly to the originating client device 116. A "yes" determination at block 432 leads to block 436, at which point the structured travel query is sent to external sources for fulfillment.

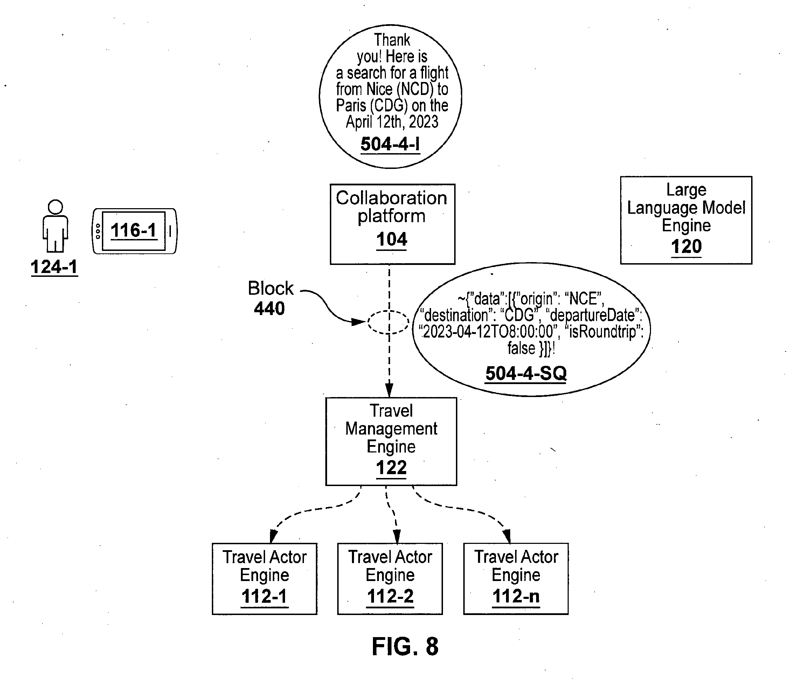

Figure 8 shows example performance of block 436, continuing from the example of Figure 7. In Figure 8, sub-message 504-4-I is held at collaboration platform 104. At the same time, sub-message 504-4-SQ is passed to travel management engine 122, which in turn can follow the JSON structure to form structured queries of each travel actor engine 112 in order to try and obtain search results of potential flight options that are consistent with the original unstructured natural language travel query initiated in message 504-1.

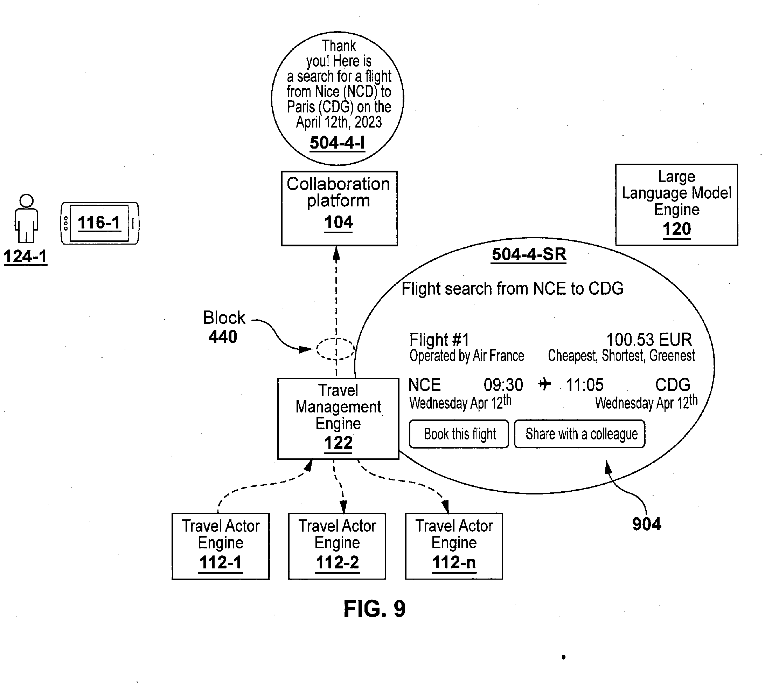

Block 440 comprises receiving a response to the structured travel query from block 436. Figure 9 shows example performance of block 440, continuing the example of Figure 8. Figure 9 shows a sub-message 504-4-SR, which includes a flight card 904 assembled by travel management engine 122 based on airline data from travel actor engine 112-1. Flight card 904 includes a single flight option from Nice (NCE) to Paris (CDG) departing at 930 AM on April 12 and arriving at 1105 AM on April 12. Flight card 904 is in a format that is readable to a user 124, and also includes interactive buttons like "Book this Flight" and "Share with a Colleague". (Note that sub-message 504-4-SR is simplified, in that multiple flight options and/or flight cards may be generated as part of the response at block 440 from one or more travel actor engines 112.)

Block 444 comprises generating an output message in response to the input message from block 404. Where no travel query was included in the message from block 404, then, as discussed, block 416, block 420, block 436 and block 440 do not occur and thus the output message at block 444 is consistent with the native natural language processing and conversational functions within LLM engine 120.

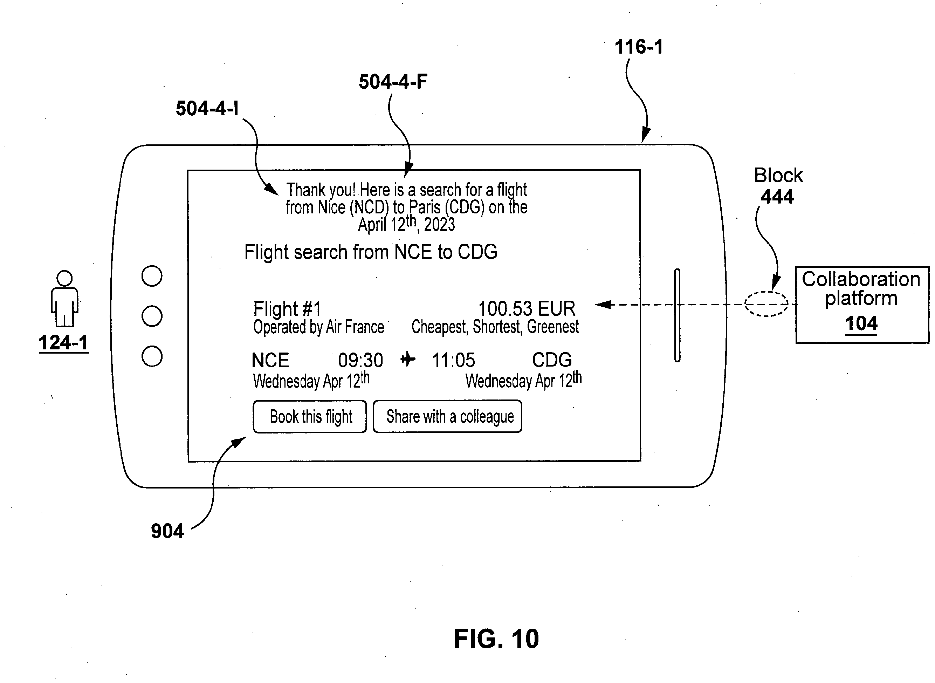

However, where a travel query was included in the message at block 404, as per our example, then block 444 comprises generating an output message that includes the travel query response from block 440. It is contemplated that the display of device 116 is controlled to generate the output message. Figure 10 shows this example performance of block 444, continuing from the example of Figure 9. In Figure 10, message 504-4-F is shown on the display of device 116-1. Message 504-4-F combines sub-message 504-4-I with flight card 904 of sub-message 504-4-R. The text "Thank you! Here is a search for a flight from Nice (NCE) to Paris (CDG) on the April 12th, 2023." as generated by LLM engine 120 is included, but sub-message 504-4-SQ has been substituted for flight card 904 in the final generation of message 504-4-F on the display of device 116-1.

Many variants and extrapolations of the specific example discussed in the Figures are contemplated and will now occur to those of skill in the art. For example, message 504-4-F can additionally include an invitation for further conversation from LLM engine 120 to help further refine the search results. As an example, message 504-4-F could include the additional question "Do you have any airline preferences?", inviting further natural language conversation between user 124 and LLM engine 120, as intermediated by collaboration platform 104. The inclusion of such an additional question can cause further iterations at block 416 and block 420, to generate further structured queries of the type earlier discussed in relation to sub-message 504-4-SQ, that lead to further searches conducted on travel actor engines 112 in similar fashion to the earlier discussion in relation to block 436 and block 440. Such further structured searches can continue to be narrowed as per responses from the user 124, with LLM engine 120 generated the structured searches and travel management engine 122 fulfilling the searches, with collaboration platform 104 substituting the structured search queries from LLM engine 120 with the user-readable responses obtained by travel management engine 122. User 124 can likewise engage in booking functions via travel management engine 122 that are offered in flight cards such as flight card 904.

A person skilled in the art can also appreciate how the structured queries generated by LLM engine 120 can be extremely sophisticated in nature, whereby travel management engine 122 may make a series of structured queries to travel actor engines 112. Here is an example scenario. If user 124-1 generates an unstructured natural language query of the form "I would like to see flights from Nice to Paris on April 12 where the flights must land only during operational hours of the Paris Metro system", then a first structured query can be made of a first travel actor engine 112 that has information about the operational hours of the Paris Metro system, which can then be returned to LLM engine 120 to generate a second structured query that filters by flights that land during the operational hours returned from the first query. LLM engine 120 may also engage in a series of questions to the user 124 to ultimately arrive at the series of necessary structured queries of different travel actor engines 112 to obtain results that are responsive to the original query.

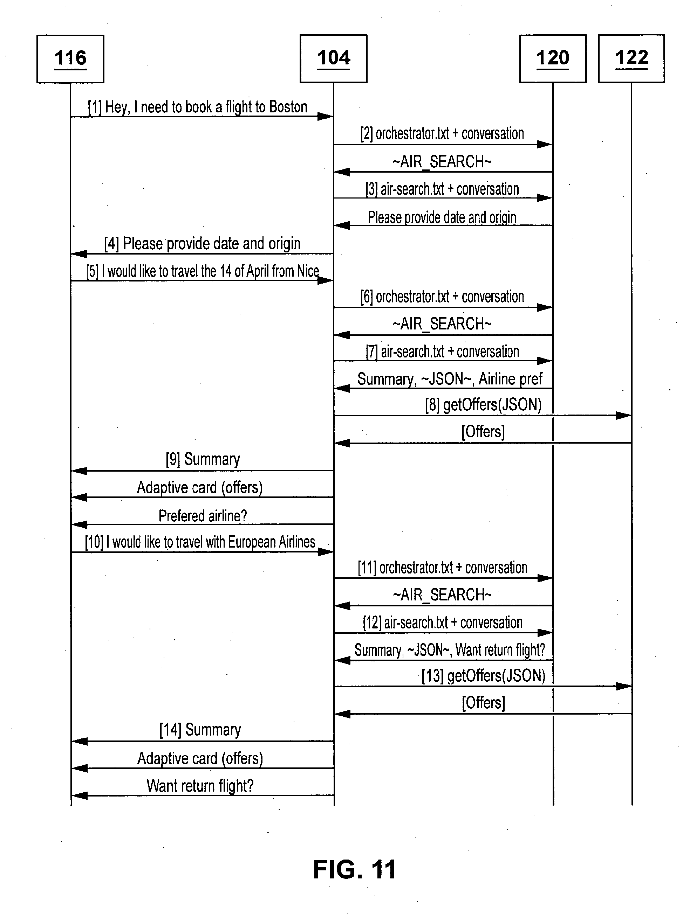

Figure 11 shows an illustration of message flows of the system of Figure 1 that can represent another way to conceptualize method 400 and variants thereon.

It will now be apparent just how far the unstructured queries can scale within the scope of the present specification: "I would like to see flights from Nice to Paris on April 12 where the flights must land only during operational hours of the Paris Metro system and on days when the Paris Symphony Orchestra is performing Mozart and hotel prices are less than 300 Euros per night for double occupancy within ten blocks of the symphony venue". Here additional structured queries are made of travel actor engines 112, which include event actors that ascertain the schedule if the Paris Symphony and accommodation actors that have hotel rooms at the specified price point and a location within the prescribed geographic radius.

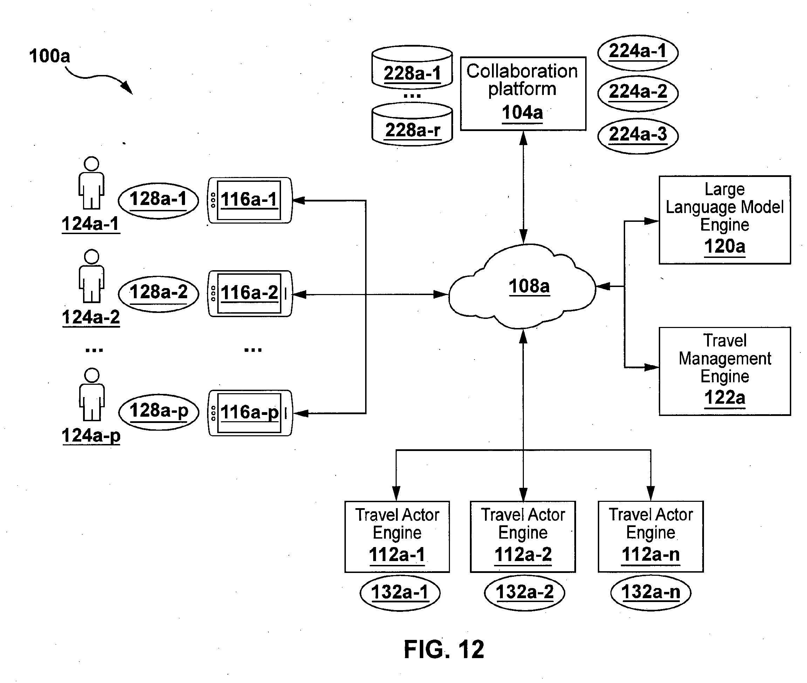

Referring now to Figure 12, a system for travel itinerary searching in accordance with another embodiment is indicated generally at 100a. Notably, in system 100a, collaboration platform 104a is a chatbot server that can be used for natural language processing (NLP) conversations with users 124a on devices 116a. Also of note is that, in system 100a, travel management engine 122a is configured to apply one or more refinement protocols when searching on travel actor engines 112a, and to accordingly refine travel itineraries received from travel actor engines 112a. Otherwise, it can be noted that system 100a is a variant of system 100, with similar elements denoted by the same reference characters, but appended with the suffix "a". (This nomenclature is used elsewhere herein.)

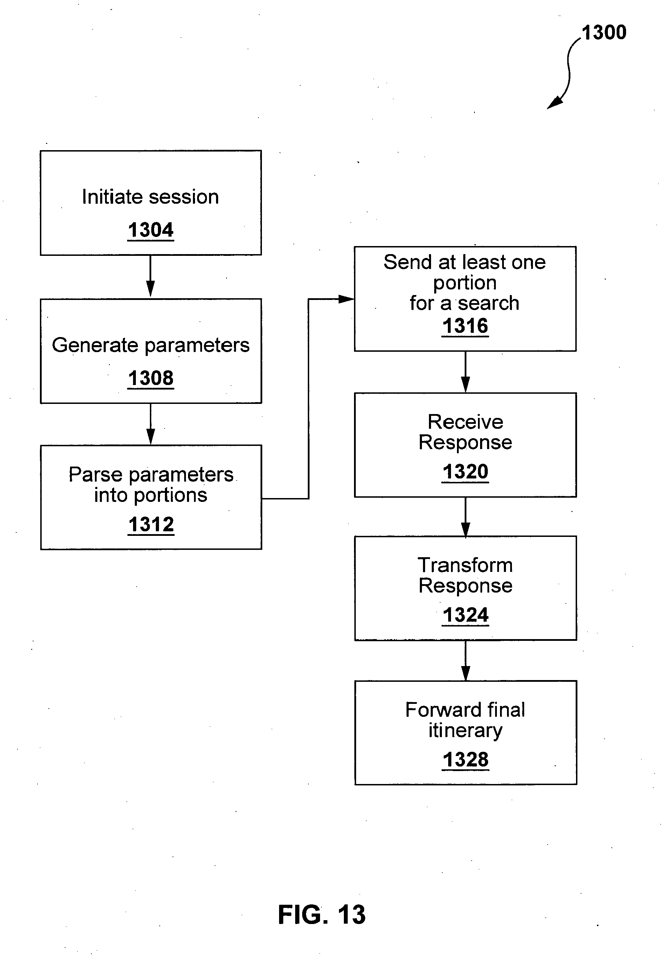

Figure 13 shows a flowchart depicting a method for real time travel itinerary searching indicated generally at 1300. Method 1300 can be implemented on system 100a. Persons skilled in the art may choose to implement method 1300 on system 100a or variants thereon (such as system 100), or with certain blocks omitted, performed in parallel or in a different order than shown. Method 1300 can thus also be varied. However, for purposes of explanation, method 1300 will be described in relation to its performance on system 100a with a specific focus on treating method 1300 as, for example, an application maintained within non-volatile storage (not shown) and executable on travel management engine 122a and its interactions with the other nodes in system 100a.

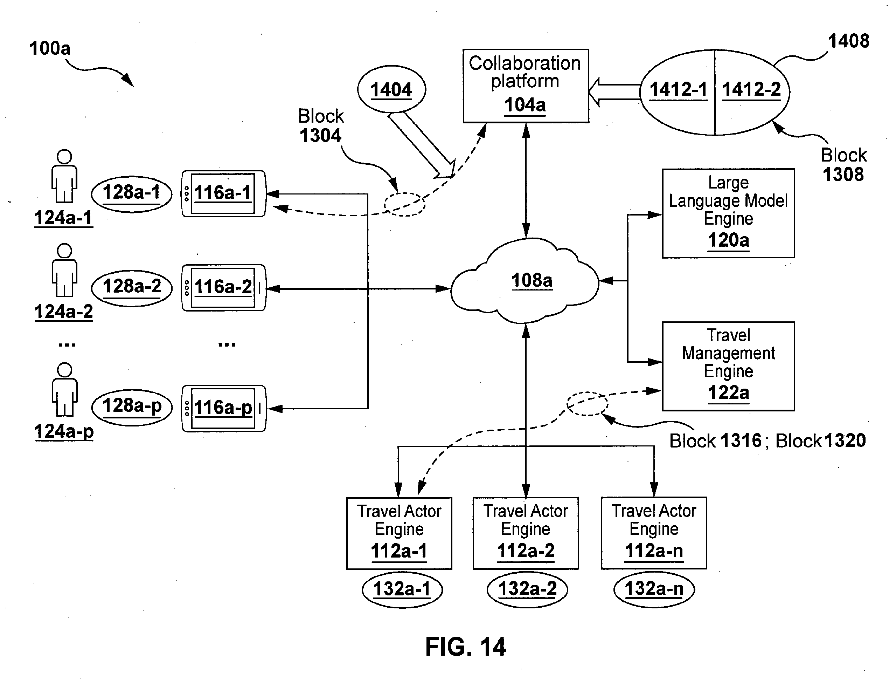

Block 1304 comprises initiating a session. A representation of performance of block 1304 shown in Figure 14, where a connection is established between device 116a and collaboration platform 104a that initiates a session therebetween for engaging in a natural language conversation. User 124a-1 can thus access the chatbot functions in platform 104a in order to engage in a travel planning conversation 1404 with platform 104a.

Conversation 1404 can be understood as roughly analogous to the combination of message 504-1; message 504-2 and message 504-3 from the description of method 400; however, conversation 1404, at this point in method 1300, excludes the reply message 504-4 because no travel itinerary has yet been searched or transformed for forwarding to device 116a-1. In general terms, conversation 1404 at this point in method 1300 establishes sufficient information in the form of data representing a natural language conversation between device 116a-1 and platform 104a that includes a complete travel query in natural language but which is not in a form searchable on travel actor engines 112a.

Block 1308 comprises generating parameters from the travel planning conversation of block 1304. Block 1308 is represented in Figure 14 as parameters 1408 are shown as stored on collaboration platform 104a. In general terms, block 1308 is roughly analogous to block 416 of method 400, in that an unstructured travel query within the conversation 1404 of block 1304 can be extracted and placed into structured form for further processing. Depending on the sophistication of the conversation 1404 and/or the chatbot capabilities of platform 104a, the large language model engine 120a may, or may not be used, as necessary to generate the parameters 1408. Rather, collaboration platform 104a may include sufficient traditional chatbot functionality to extract travel planning parameters 1408 from the conversation; otherwise, LLM engine 120a can be engaged as needed to generate parameters 1408. In other words, LLM engine 120a may in certain situations be unnecessary and obviated altogether from system 100a.

Example performance of block 1308 is shown in Figure 14 where a software object stored on collaboration platform 104a is indicated representing parameters 1408 that are extracted from the conversation 1404.

Block 1312 comprises parsing the parameters generated at block 1308 into portions. At least two portions are contemplated, but in other embodiments, more than two portions may be determined. The portions are determined according to a refinement protocol. In Figure 14, parameters 1408 are shown as divided into first portion 1412-1 and second portion 1412-2 for illustrative purposes.

Block 1316 comprises sending at least one of the portions 1412 from block 1312 for a search, and block 1320 comprises receiving a response to the search. Representative performance of block 1316 and block 1320 is shown in Figure 14, as a bidirectional line between travel management engine 122a and first travel actor engine 112a-1.

As will be explained further below, certain portions 1412 may be immediately searchable on one or more travel actor engines 112a, such as previously described in relation to block 436 and block 440 of method 400. However, additional portions may be used for searching on other travel actor engines 112a or elsewhere on the Internet for combining, or the additional portions of the travel parameters may include criteria for refinement, filtering, weighting or other transformations.

(As a non-limiting example, portion 1412-1 may be roughly analogous to sub-message 504-4-SQ as discussed earlier in relation to Figure 7, which includes parameters that are searchable within the structured data fields on one more travel actor engines 112a, while portion 1412-2 may include parameters that are not searchable on the same travel actor engine 112a. Parameters 1408 will be better understood from the following discussion of this and other examples.)

Block 1320 comprises receiving a response to the search from block 1316 from the relevant travel actor engine 112a. The response can be in the form of a raw travel outline. As a non-limiting illustrative example, the response at block 1320 can be considered roughly analogous to block 440 from method 400, although as a notable difference the result returned at block 1320 is not a final travel itinerary but in the form of a raw travel outline, which can include a plurality of results that may require further processing. Again, block 1320 will be understood more fully from the discussion below.

Block 1324 comprises transforming the raw travel outline response from block 1320 based on at least one of the portions 1412 of the travel parameters 1408 from block 1308. Typically, whichever portions 1412 were used at block 1316 will not be used at block 1324. The transforming at block 1324 thus generates a final travel itinerary responsive to the conversation based on the travel parameters and any refinement protocol from block 1308 and block 1312.

Block 1328 comprises forwarding the final itinerary to the relevant client device, such as the client device that initiated the session at block 1304.

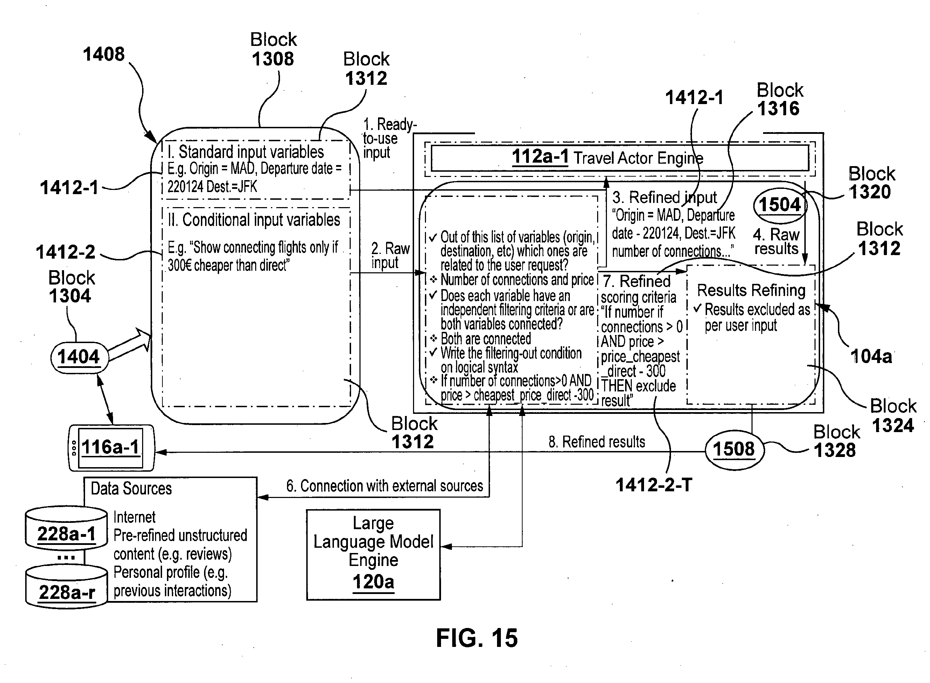

Having broadly described method 1300, further understanding can be achieved by way of various non-limiting examples. A first example is shown in the schematic representation of Figure 15 which assists in visualization of the processing of conversation 1404 in system 100a. As per block 1308, travel parameters 1408 have been generated from conversation 1404, and then parsed into different portions 1412 as per block 1312. In the specific example of Figure 15, portion 1412-1 includes structured data fields searchable on travel-actor engine 112a and portion 1412-2 includes conditional input variables defining criteria that can be used to further filter a raw travel outline. Portion 1412-1 is roughly analogous to message 504-4-SQ of Figure 7, representing a structured query extracted from conversation 1404, although portion 1412-1, on its own, will generate a plurality of results that are not consistent with the intent of conversation 1404 expressed in portion 1412-2. Accordingly, Figure 15 also shows collaboration platform 104a using a refinement protocol to convert portion 1412-2 into a transformed portion 1412-2-T that provides Boolean criteria to further filter a raw travel outline 1504 and exclude superfluous results from outline 1504 and thus transform the raw travel outline 1504 into a travel itinerary 1508 responsive to conversation 1404 based on parameters 1408 according to the refinement protocol that generated portion 1412-2-T.

To elaborate on this example, conversation 1404 is shown in Figure 15 as including a request for flights from Madrid International airport (MAD) with departures on January 22, 2024 for New York (JFK). Conversation 1404 resulted in portion 1412-1, which readily turns into a JSON format that matches the structured data fields of travel actor engine 112a-1. The conversation 1404 also included the conditional input variables "Show connecting flights only if 300 euros cheaper than direct flights", which become the criteria in portion 1412-2 that do not match the structured data fields of travel actor engine 112a-1. Accordingly, "Show connecting flights only if 300 Euros cheaper than direct flights" is transformed into portion 1412-2-T ("IF number of connections > 0 AND price > cheapest_price_direct - 300 THEN exclude result") which is applied using collaboration platform 104a, making use of LLM engine 120a as needed. Thus, assume the raw travel outline 1504 from travel actor engine 112a-1 includes all of the flights from MAD to JFK on January 22, 2024, regardless of the number of connections. At this point, portion 1412-2-T can be applied to raw travel outline 1504 in order to filter out flights that do not satisfy the criteria in portion 1412-2-T in order to generate travel itinerary 1508, ultimately satisfying the substance of conversation 1404.

As shown in Figure 15, platform 104a can thus access LLM engine 120a as needed, (such as to generate portions 1412 and/or refined portion 1412-2-T according to the refinement protocol and/or to generate natural language responses within conversation 1404 or travel itinerary 1508), if the inherent chatbot functions of platform 104a cannot effect such generation. Platform 104a can also access the Internet and/or tables 228 and/or accounts 128a and/or other data sources as needed.

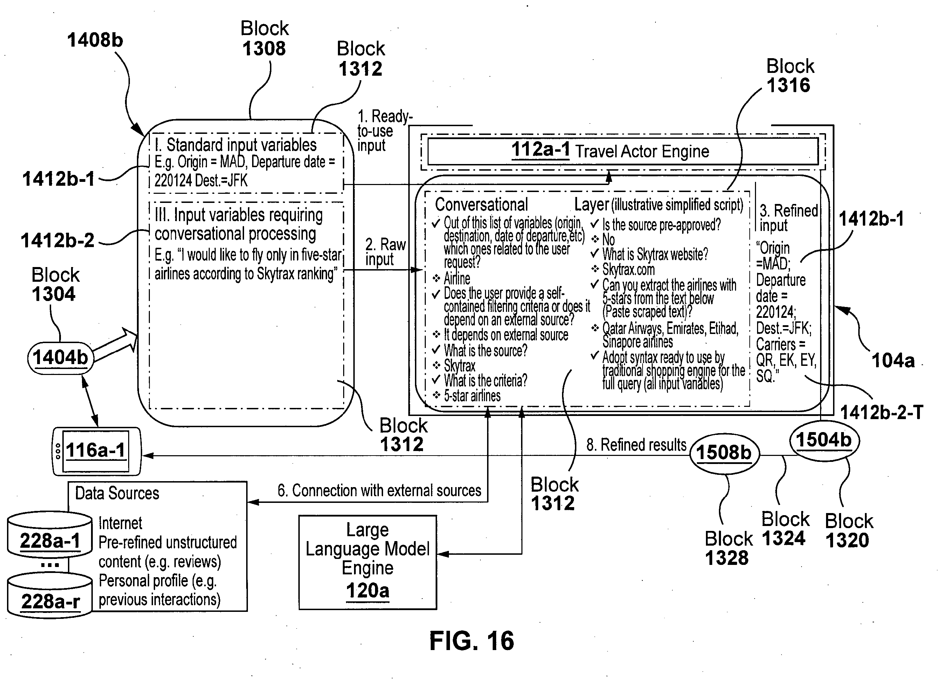

Another example that helps illustrate method 1300 is shown in the schematic representation of Figure 16 which assists in visualization of the processing of a conversation 1404b in system 100a. Conversation 1404b generates parameters 1408b, which are parsed or divided into two portions 1412b. Portion 1412b-1 is substantially the same as portion 1412-1. Portion 1412b-2 includes additional criteria that include examining third-party websites in order to refine it into criteria that can be of the same type of portion 1412b-1.

Notably, portion 1412b-2 includes the natural language criteria "I would like to fly only in five-star airlines according to Skytrax ranking". Accordingly, collaboration platform 104a, working with LLM engine 120a as needed, can formulate a query to "skytraxratings.com" that gathers or generates a list of airlines that have five-star rankings on Skytrax. In a sense, the handling of portion 1412b-2 is similar to the generation of message 504-4-SQ, as it parses "I would like to fly only in five-star airlines according to Skytrax ranking" into a structured query to skytrax.com. The results returned from Skytrax then become incorporated into the search query sent to travel actor engine 112a-1. Figure 16 shows an LLM script as follows:
Chatbot: Out of this list of variables (origin, destination, date of departure, etc.) which one is related to the user request?
LLM: Airline
Chatbot: Does the user provide a self-contained filtering criteria or does it depend on an external source?
LLM: It depends on external source
Chatbot: What is the source?
LLM: Skytrax
Chatbot: What is the criteria
LLM: 5-stars airlines
Chatbot: What is Skytrax website?
LLM: Skytrax.com
Chatbot: Can you extract the airlines with 5- stars from the text below (Paste scraped text)
LLM: Qatar Airways, Emirates, Etihad, Singapore airlines
Chatbot: Adopt syntax ready to use by travel-actor engine for the full query (all input variables)
LLM: Carriers= QR, EK, EY, SQ

The above conversation thus represents a refinement protocol applied at block 1312 to generate transformed portion 1412b-2-T, which reads "Carriers= QR, EK, EY, SQ", which for our example we will assume is a structured format that is consistent with the search functionality of travel actor engine 112a-1. Thus, portion 1412b-1 and portion 1412b-2-T can be combined to generate the query "Origin =MAD; Departure date = 220124; Dest. = JFK; Carriers = QR, EK, EY, SQ.", which is sent at block 1316 to travel actor engine 112a-1.

The raw travel outline 1504b is received at block 1320 from travel actor engine 112a-1 which includes a list of flight options from MAD to JFK on January 1, 2024 that is limited to those four carriers. Since raw travel outline 1504b already includes a final itinerary, the transformation at block 1324 is optional and raw travel outline 1504b could be simply passed along as itinerary 1508b, but would typically include using the chatbot function of collaboration platform 104a or the large language model engine 120a to inject the travel outline 1504b into the flow of conversation 1404b as a response that includes itinerary 1508b.

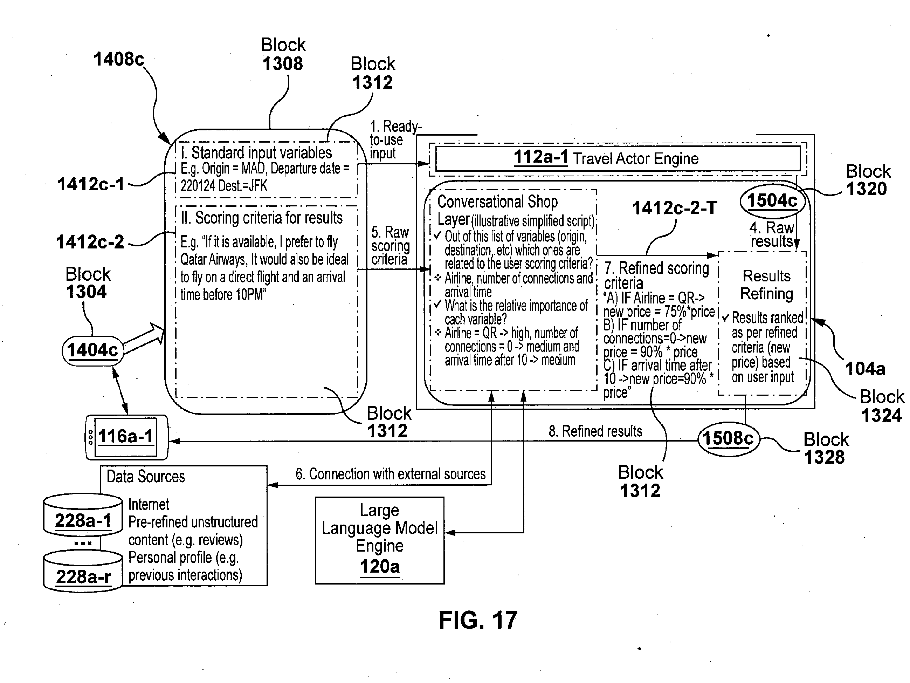

Another example that helps illustrate method 1300 is shown in the schematic representation of Figure 17 which assists in visualization of the processing of a conversation 1404c in system 100a. According to this example, the conversation 1404c includes a search for flights from MAD to JFK are being requested with January 24, 2022. Furthermore, conversation 1404c includes the element "If it is available, I prefer to fly Qatar Airways. It would also be idea to fly on a direct flight and an arrival time before 10PM". Conversation 1404c generates parameters 1408c, which are parsed or divided into two portions 1412c. Portion 1412c-1 is substantially the same as portion 1412-1, and portion 1412c-2 is similar, though not the same, as the type of criteria as portion 1412-2. Thus portion 1412c-1 and portion 1412c-2 can be managed in substantially the same fashion as was described in relation to Figure 15, with some notable differences in relation to portion 1412c-2. Portion 1412c-2 outlines preference-based criteria, as exemplified by the statement: "If it is available, I prefer to fly with Qatar Airways when possible, and ideally on a direct flight that arrives before 10 pm." The use of "prefer" and "ideally" in this context signals flexible intention rather than rigid requirements. Accordingly, Figure 17 and this variant on method 1300 suggest representing these preferences with a quantitative ranking system that accommodates the non-mandatory nature of these criteria.

Accordingly, collaboration platform 104a and/or LLM engine 120a is configured to process portion 1412c-2 "If it is available, I prefer to fly with Qatar Airways when possible, and ideally on a direct flight that arrives before 10 pm" into the following refined portion 1412c-2-T: "A) IF Airline = QR -> new price = 75% * price B) IF number of connections = 0 -> new price = 90% * price C) IF arrival time after 10 -> new price = 90% * price". 75%, 90% and 90%, respectively, represent weighting or weighting scores.

Refined portion 1412c-2-T is thus a Boolean expression within a syntax recognizable to collaboration platform 104a or LLM engine 120a. Refined portion 1412c-2-T is generated by assigning a weighing score to one or more of the criteria in portion 1412c-2 to create a ranking of the results of the raw travel outline based on the weighting score. The weighting score can be based on a variety of factors, but in the example of 1412c-2-T, it is based on an adjustment factor applied to a quantitative metric within the raw travel outline to define the ranking. Within the example of portion 1412c-2-T, the quantitative metric is price and the criteria is based on a preferred airline and the adjustment factor generates a notional price for the preferred airline in relation to the prices for the non-preferred airline. The adjustment factor is thus for the purpose of ranking results of the preferred airline higher than the non-preferred airline, but the actual price for both preferred airline and non-preferred airlines can remain part of the final itinerary 1508c. A person of skill in the art will now recognize other ways of generating refined portion 1412C-T based on different approaches.

Portion 1412c-2-T can thus be applied as filtering / ranking criteria to raw travel outline 1504c, similar to the way portion 1412-2-T was applied to travel outline 1504, discussed in relation Figure 15. Notably, any flight options involving Qatar airways will be listed near the top, and likewise any direct flights that arrive before 10pm will be listed near the top.

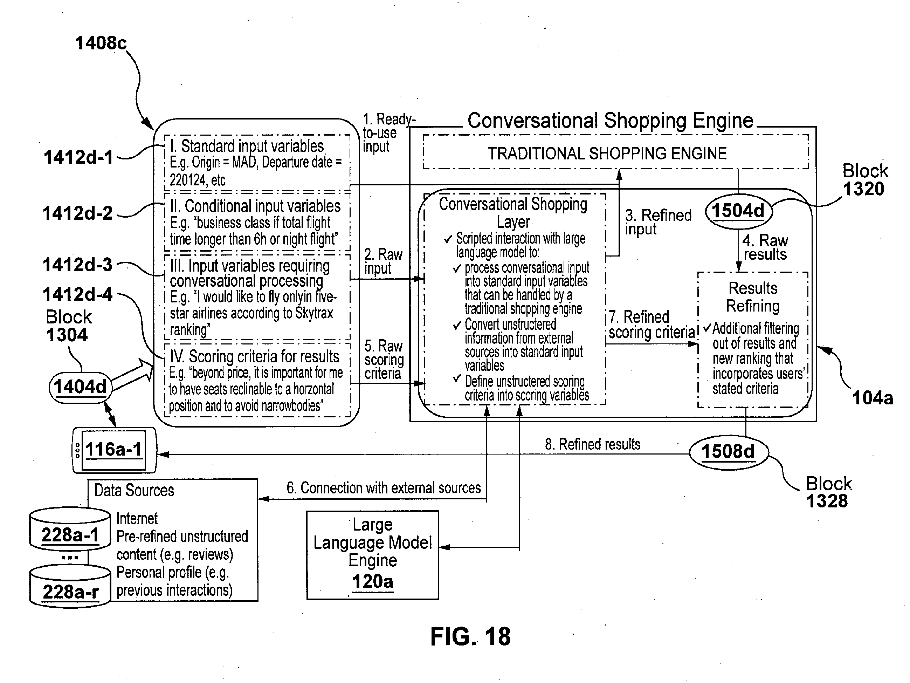

Another example that helps illustrate method 1300 is shown in the schematic representation of Figure 18 which assists in visualization of the processing of a conversation 1404d in system 100a. Conversation 1404d generates parameters 1408d, which are parsed or divided into four portions 1412d.

Portion 1412d-1 reads "Origin = MAD, Departure date = 220124, etc."

Portion 1412d-3 reads I would like to fly only in five-star airlines according to Skytrax ranking"

Portion 1412d-2 reads "business class if total flight time longer than 6h or night flight".

Portion 1412d-4 reads " "beyond price, it is important for me to have seats reclinable to a horizontal position and to avoid narrowbodies".

Portion 1412d-1 is thus substantially the same as portion 1412-1 and processed in substantially the same way as described in the example of Figure 15.

Portion 1412d-2 is substantially the same as portion 1412-2 and can be processed in substantially the same way as described in the example of Figure 15.

Portion 1412d-3 is substantially the same as portion 1412b-2 and can be processed in substantially the same way as described in the example of Figure 16.

Portion 1412d-4 is substantially the same as portion 1412c-2 and can be processed in substantially the same way as described in the example of Figure 17.

The example in Figure 18 thus illustrates how method 1300 also encompasses combinations of the examples from Figure 15, Figure 16 and/or Figure 17. Further variations beyond these examples will now occur to those of skill in the art.

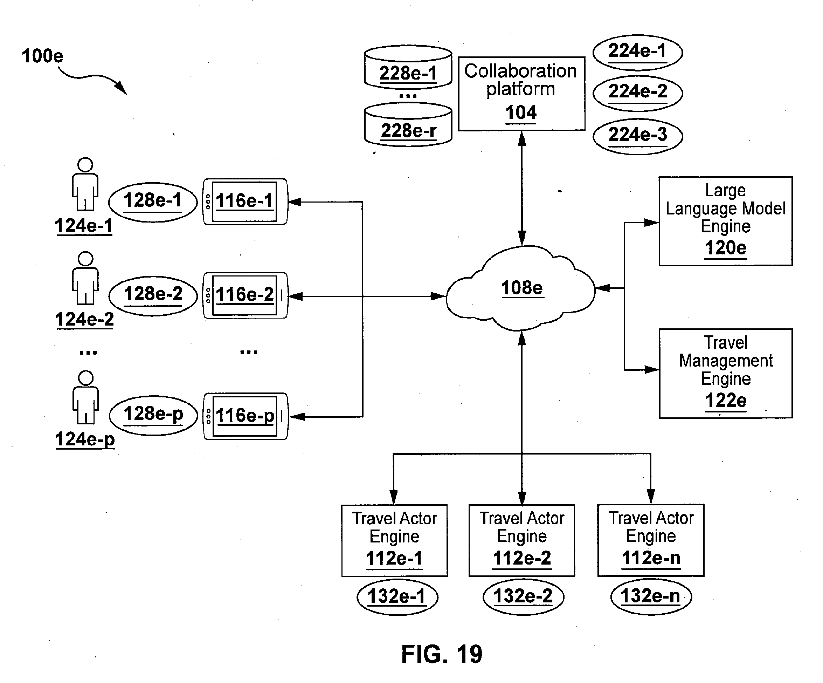

Referring now to Figure 19, a system for conversational travel itinerary searching in accordance with another embodiment is indicated generally at 100e. System 100e is a variant of system 100 and system 100a, with similar elements denoted by the same reference characters, but appended with the suffix "e".

Notably, in system 100e, collaboration platform 104e is a chatbot server that can be used for natural language processing (NLP) conversations with users 124e on devices 116e. Collaboration platform 104e can be a stand-alone platform, independent from other nodes in system 100e, or it can be integral with one or more other nodes in system 100e.

For example, in certain presently preferred embodiments, collaboration platform 104e is integrated into a travel actor engine 112e providing a chatbot function. For example, travel actor engine 112e-1 can be a meta-online travel agency such as Kayak^{™}, in which case collaboration platform 104e may be a conversational chatbot function incorporated into Kayak.com. As another example, travel actor engine 112e-2 can be an online travel agency such as Expedia^{™}, in which case collaboration platform 104e may be a conversational chatbot function incorporated into Expedia.com. While not shown in Figure 19, it is also to be understood that a plurality of collaboration platforms 104e may be provided, with each collaboration platform 104e being respective to one or more travel actor engines 112e.

As another example, one or more travel actor engines 112e may provide chatbot functions via an application programming interface (API) to collaboration platform 104e whereby traffic from devices 116e that directly access a given travel actor engine 112e may utilize chatbot functions on collaboration platform 104e that provide the experience on device 116e of direct interaction with a given travel actor engine 112e, even though the chatbot function is being provided separately on collaboration platform 104e. Likewise, LLM engine 120e may also provide similar support to travel actor engines 112e. For example, LLM engine 120e may include plug-ins for both Expedia and Kayak, ultimately allowing client devices 116e to use natural language conversation to perform searches on Expedia and Kayak. Thus, system 100e contemplates a similar configuration, where access to searching on travel actor engines 112e is provided by way of plugins on collaboration platform 104e and/or LLM engine 120e.

A person of skill in the art will now begin to appreciate the flexibility of the various hardware configurations within the scope of the present specification, and will also appreciate that regardless of the exact configuration, the teachings can provide a more efficient utilization of computational and processing resources in the performance of search functions performed ultimately on travel actor engines 112e, which likewise leads to more efficient use of network bandwidth over network 108e. These advantages and solutions to the technical problem of wasted network resources due to repeated searches will continue to become more apparent with the benefit of the entirety of this specification.

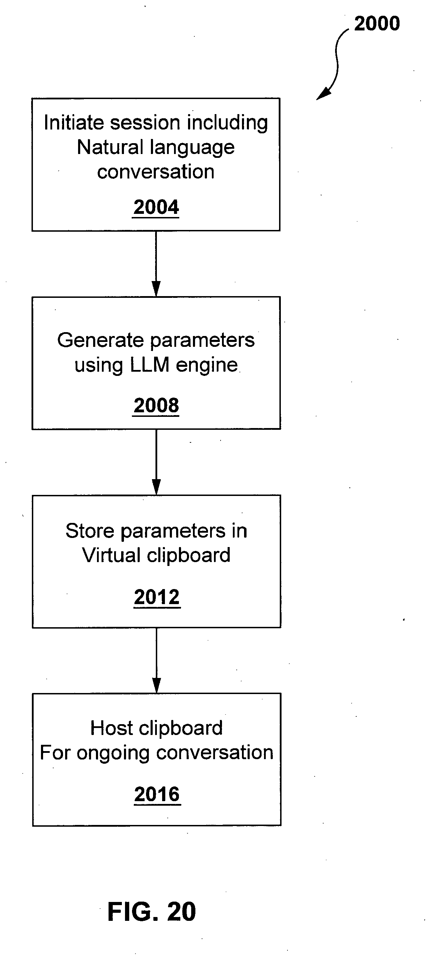

To that end, Figure 20 shows a flowchart depicting a method for conversational travel itinerary searching indicated generally at 2000. Method 2000 can be implemented on system 100e. Persons skilled in the art may choose to implement method 2000 on system 100e or variants thereon (such as those discussed and/or in relation to system 100 or system 100a), or with certain blocks omitted, performed in parallel or in a different order than shown. Method 2000 can thus also be varied. However, for purposes of explanation, method 2000 will be described in relation to its performance on system 100e with a specific focus on treating method 2000 as, for example, an application 224e maintained within non-volatile storage on collaboration platform 104e and executable on platform 104e for interactions with the other nodes in system 100e.

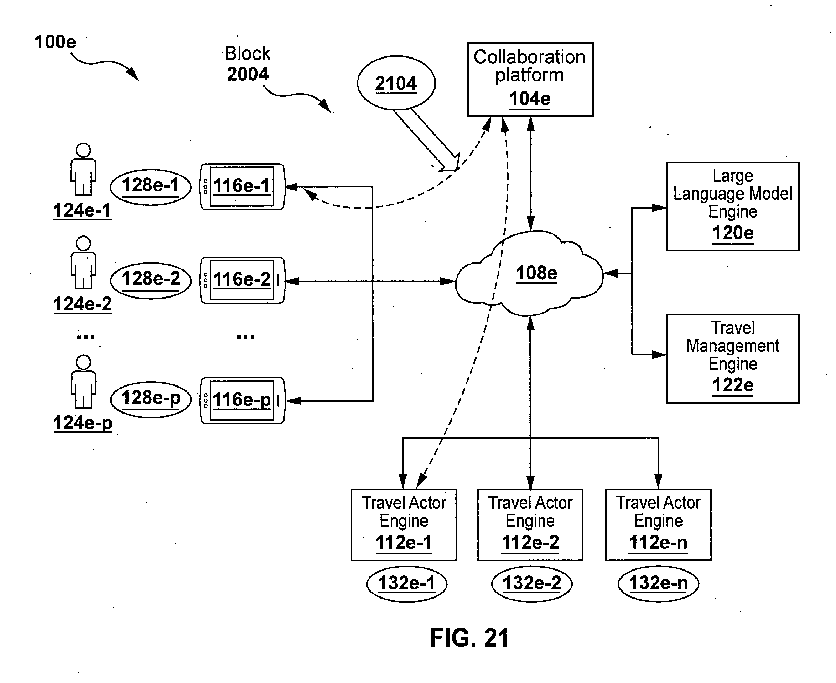

Block 2004 comprises initiating a session. A representation of performance of block 2004 is shown in Figure 21, where a connection is established between device 116e-1 and collaboration platform 104e that initiates a session therebetween for engaging in a natural language conversation. User 124e-1 can thus access the chatbot functions in platform 104e in order to engage in a travel planning conversation 2104 with platform 104e.

Conversation 2104 can be understood as a dynamic chatbot conversation with questions from platform 104e based on prompts from device 116e-1. The conversation 2104 is dynamic in the sense that platform 104e is contemplated to be interacting with at least one travel actor engine 112e-1 to retrieve options and/or partial responses in a dialogue that is attempting to iterate towards a final itinerary that is agreed to by user 124e-1. The interaction with travel actor engine 112e-1 is thus represented in Figure 21. In a concrete example, travel actor engine 112e-1 can be a meta-online travel agency such as Kayak.com, which itself may interact with other travel actor engines 112e as part of working towards building an itinerary of several travel-actors on behalf of user 124e-1 using the search and computation capabilities of device 116e-1.

An example illustration conversation 2104 is provided in TABLE 228e-1.

**TABLE 228e-1**

| Conversation 2104 | |
|---|---|
| **Node** | **Text** |
| Device 116e-1 | Hello, I want to travel! Can you help me? |
| Platform 104e | Sure! Where do you live? |
| Device 116e-1 | I live in Nice |
| Platform 104e | Great! Where would you like to go for your trip? |
| Device 116e-1 | I want to visit museums in Europe |
| Platform 104e | That sounds like a great plan! Here are five cities in Europe known for their museums: |
| | 1. Paris, France (CDG) -Visit the Louvre Museum, Musée d'Orsay, and Centre Pompidou. |
| | 2. London, United Kingdom (LHR) -Explore the British Museum, National Gallery, and Tate Modern. |
| | 3. Amsterdam, Netherlands (AMS) -Discover the Rijksmuseum, Van Gogh Museum, and Anne Frank House. |
| | 4. Madrid, Spain (MAD) -Experience the Prado Museum, Reina Sofia Museum, and Thyssen-Bornemisza Museum. |
| | 5. Florence, Italy (FLR) -Immerse yourself in the Uffizi Gallery, Accademia Gallery, and Palazzo Pitti. |
| Platform 104e | Let me know if you need any more information or if there's anything else I can assist you with! |
| Platform 104e (Query to Travel Actor Engines 112e via Engine 112e-1; may be hidden to Device 116e-1) | Query based on above to prefetch suggestions. (Optional). |
| Device 116e-1 | We are two. My girlfriend likes Miro. |
| Platform 104e | That's great to know! If your girlfriend is a fan of Joan Miró, here are some cities in Europe that have museums featuring his works: |
| | 1. Barcelona, Spain (BCN) -Visit the Fundació Joan Miró, which houses a large collection of Miró's artworks. |
| | 2. Paris, France (CDG) -Explore the Musée National d'Art Moderne at the Centre Pompidou, which has a significant collection of Miró's works. |
| | 3. Madrid, Spain (MAD) -Discover the Museo Nacional Centre de Arte Reina Sofia, which showcases some of Miró's iconic pieces. |
| | 4. London, United Kingdom (LHR) -Check out the Tate Modern, which occasionally exhibits Miró's artworks. |
| | 5. Basel, Switzerland (BSL) -Visit the Fondation Beyeler, which has a collection of modern and contemporary art, including works by Miró. |
| Platform 104e | These cities offer a great opportunity to explore Miró's work |
| Platform 104e (Query to Travel Actor Engines 112e via Engine 112e-1; may be hidden to Device 116e-1) | |
| | Query based on above to prefetch suggestions. (Optional). ) |
| Device 116e-1 | Anything this winter for barcelona? We can afford 500USD max |
| Platform 104e | Certainly! I found a great option for you to visit Barcelona this winter within your budget: |
| | • Departure: November 2nd, 2023 |
| | • Return: November 7th, 2023 |
| | • Price: $195.17 per person |
| | Please note that prices may vary depending on availability and the specific dates you choose. Let me know if you would like more information or if there's anything else I can assist you with! |
| Platform 104e (Query to Travel Actor Engines 112e via Engine 112e-1; may be hidden to Device 116e-1) | Query based on above to prefetch suggestions. (Optional). , using {'origin_city': 'NCE', 'destination_city': 'BCN', 'budget': '0-500'} |
| Device 116e-1 | A week-end in early 2024 ? |
| Platform 104e | Certainly! Here are some options for a weekend trip to Barcelona in early 2024: |
| | 1. Departure: January 28th, 2024 -Return: January 30th, 2024 oPrice: $301.63 per person |
| | 2. Departure: February 10th, 2024 -Return: February 12th, 2024 oPrice: $302.83 per person \| |
| | Please note that prices may vary depending on availability and the , specific dates you choose. Let me know if you would like more information or if there's anything else I can assist you with! |
| Platform 104e (Query to Travel Actor Engines 112e via | Query based on above to prefetch suggestions. (Optional). Eg. using {'origin_city': 'NCE', 'destination_city': 'BCN', 'dep_date_min': |
| Engine 112e-1; may be hidden to Device 116e-1) | '20240101', 'dep_date_max': '20240331', 'stay_min': 2, 'stay_max': 3, 'budget': '0-300'} |
| Device 116e-1 | $301.63 per person will not fit our budget |
| Platform 104e | I apologize, but I couldn't find any weekend trips to Barcelona within your specified budget of $500 USD. However, there are still other options available. If you're flexible with your travel dates or budget, I can provide you with more options. Let me know your preferences, and I'll be happy to assist you further! |

At this point in method 2000, it will be assumed that conversation 2104 ceases, or at least pauses. It can be noted that conversation 2104 is not complete, in that the (unstructured) parameters gathered from device 116e-1 are insufficient to finalize a travel itinerary. Method 2000 thus advances from block 2004 to block 2008. The event that causes the advance from block 2004 to block 2008 is not particularly limited, but can include an express instruction received at device 116e-1 that is forwarded to platform 104e. One way such an instruction can be issued is to launch an application, such as a browser extension on device 116e-1, that interacts with the software that facilitates the conversation 2104 with the chatbot on platform 104e. Another way the instruction to commence block 2008 can occur is implicitly, such as by a termination of the session from block 2004, for whatever reason, (the chatbot application on device 116e-1 is closed, network failure etc.) and thus block 2008 can assume handling of conversation 2104.

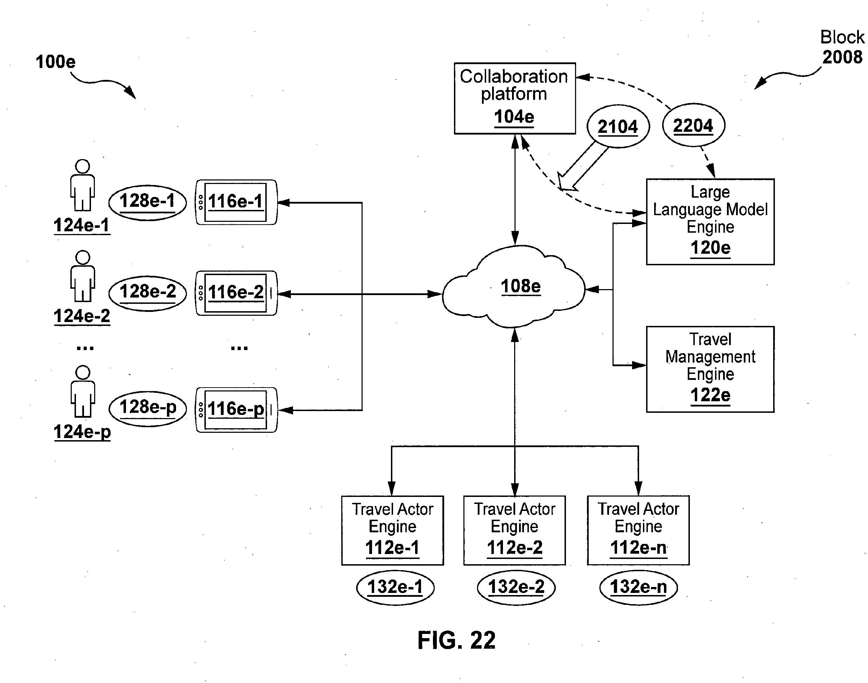

Block 2008 thus comprises generating parameters from the conversation of block 2004. In a present embodiment the parameters are generated by an LLM engine, such as LLM engine 120e. Performance of block 2008 is represented in Figure 22 as conversation 2104 is passed from collaboration platform 104e to LLM engine 120e along with a prompt. Table 228e-2 shows an example of the interaction between collaboration platform 104e to LLM engine 120e at block 2008.

**TABLE 228e-2**

| Using Conversation 2104 to generate parameters 2204 | |
|---|---|
| **Node** | **Text** |
| Platform 104e | From the conversation 2104, build in a json format a few-word short summary of the following travel parameters : origin, period, budget, interest, passenger, type of content, last proposed destination. |
| LLM Engine 120e | Here is the summary of travel parameters 2204 in JSON format of conversation 2104: |
| LLM Engine 120e (Generating travel parameters 2204) | {"Origin": "Nice", |
| | "Period": "Winter 2023/Early 2024", |
| | "Budget": "500 USD max", |
| | "interest": "Museums in Europe, cities with museums featuring the works of Joan Miró", |
| | "Passenger": "2 (Traveler and girlfriend)", |
| | "Type of content": "Flights", |
| | "Last proposed destinations": ["Barcelona, Spain (BCN)"]} |

Thus, LLM engine 120e generates travel parameters 2204 based on conversation 2104 and returns those parameters 2204 back to collaboration platform 104e.

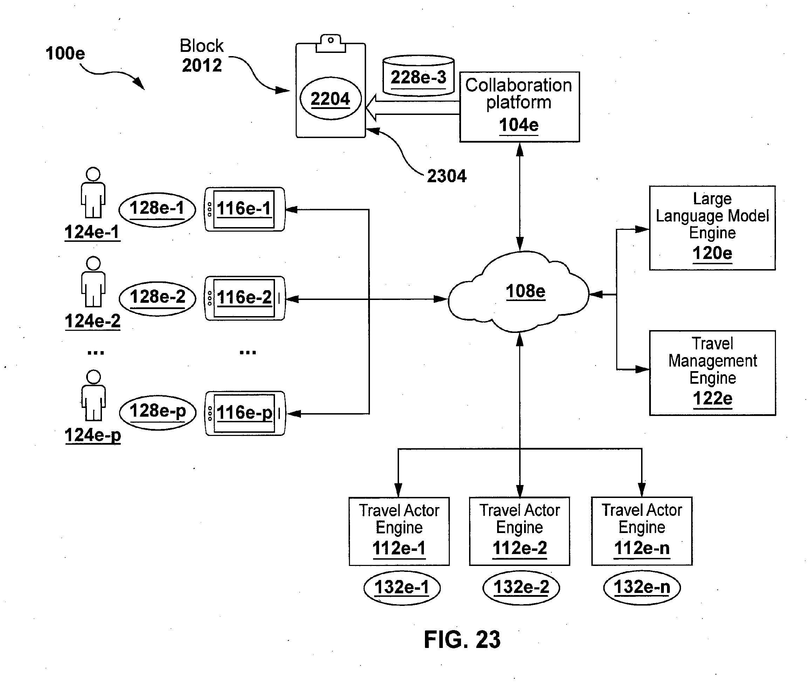

Block 2012 comprises storing the parameters from block 2008 in a virtual clipboard. Continuing with our example, performance of block 2008 is represented in Figure 23 as parameters 2204 are shown on a virtual clipboard 2304 that is stored in table 228e-3 of collaboration platform 104e. Parameters 2204 are stored in association with an identifier of user 124e-1, which for illustrative purposes will be assumed to be an identifier for account 128e-1. (In variants, the parameters 2204 can also be stored in association with conversation 2104 itself, so that multiple conversations (i.e. one or more conversations in addition to conversation 2104) can be managed for the same user 124e).

Block 2016 comprises hosting the clipboard from block 2012 for conversation that furthers the original conversation from block 2004.

Many ways of making use of the clipboard are contemplated. In one example continuing our illustration, where a device 116e (such as device 116e-1) on behalf of user 124e-1 connects to collaboration platform 104e to resume the travel itinerary planning from block 2004, then platform 104e can load parameters 2204 from clipboard 2304 and resume the conversation.

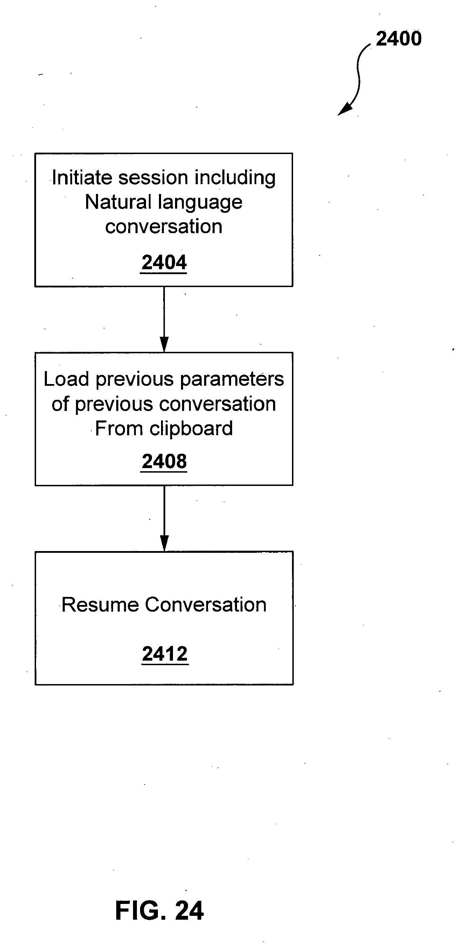

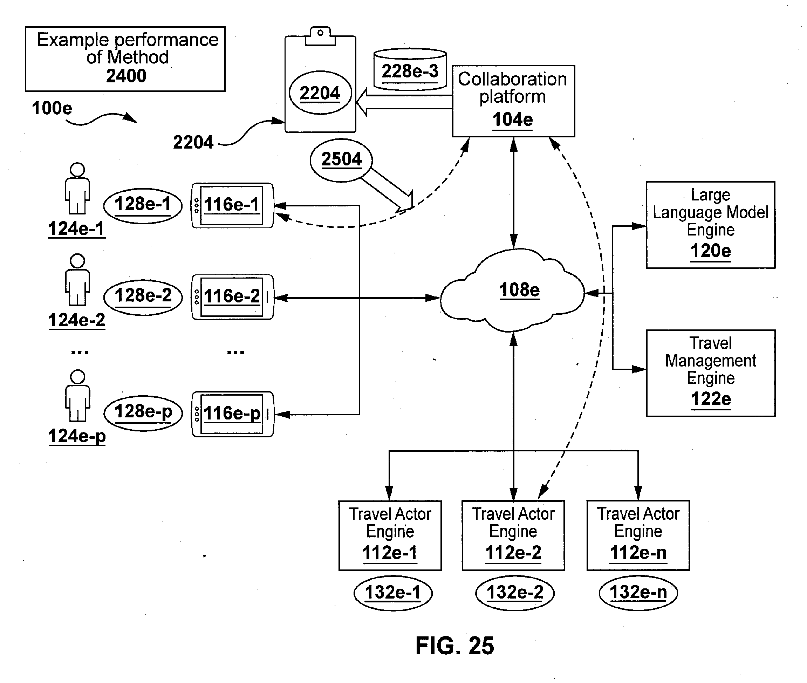

Method 2400 on Figure 24 shows an example of how the hosted clipboard can be used. Block 2404 comprises initiating a session including natural language conversation, quite like block 2004 except that block 2404 contemplates the eventual resumption of conversation 2104. Block 2408 comprises loading the parameters from the previous conversation from the clipboard that is hosting the parameters from block 2016. Block 2412 comprises the actual resumption of the conversation 2104. Figure 25 and Table 228e-4 illustrate example performance of method 2400.

**TABLE 228e-4**

| Conversation 2504, resuming conversation 2104 | |
|---|---|
| Using parameters 2204 from clipboard 2304 | |
| **Node** | **Text** |
| Device 116e-1 | Hello, I want to travel! Can you help me? |
| | |
| Platform 104e | Sure, Where do you live? |
| | |
| Device 116e-1 | Here is a summary of my previous conversation |
| Insert clipboard 2304 | {"Origin": "Nice", |
| | "Period": "Winter 2023/Early 2024", i |
| | "Budget": "500 USD max", |
| | "interest": "Museums in Europe, cities with museums featuring the works of Joan Miró", |
| | "Passenger": "2 (Traveler and girlfriend)", |
| | "Type of content": "Flights", |
| | "Last proposed destinations": ["Barcelona, Spain (BCN)"]} |
| | |
| Platform 104e (Connection to Travel Actor engine 112e-2) | Great! Based on your preferences, here are 5 city suggestions near major airports that have museums featuring the works of Joan Miró: |
| | 1. Barcelona, Spain (BCN) - The city where Joan Miró was born, with the famous Joan Miró Foundation showcasing his works. |
| | 2. Palma de Mallorca, Spain (PMI) - Visit the Pilar and Joan Miró Foundation, which houses a significant collection of Miró's art. |
| | 3. Madrid, Spain (MAD) - Explore the Reina Sofia Museum, which has a dedicated section to Joan Miró's artwork. - |
| | 4. Paris, France (CDG) The Musée National d'Art Moderne at the Centre Pompidou has a collection of Miró's works. |
| | 5. London, United Kingdom (LHR) - The Tate Modern Museum features some of Joan Miró's artwork in its collection. |
| | Let me know if you need any further assistance! |

Figure 25 and Table 228e-4 thus contemplate that device 116e-1 is being operated by user 124e-1 to continue the travel itinerary planning of conversation 2104. In the Figure 25 example, device 116e-1 is engaging in conversation 2504 and accessing travel actor engine 112e-2 instead of travel actor engine 112e-1, but it is to be understood that conversation 2504 can include interaction with any one or more travel actor engines 112e. However, according to one example, let us assume that: i) travel actor engine 112e-1 is a meta-online travel agency, such as Kayak^{™}, ii) travel actor engine 112e-2 is an online travel agency, such as Expedia^{™}, and; iii) parameters 2204 were indirectly derived by searching Kayak (travel actor engine 112e-1) which in turn searched Expedia^{™} (travel actor engine 112e-2). According to this example, the continuation of conversation 2104 from Kayak to conversation 2504 is computing-resource efficient, because a) user 124e-1 did not have to re-enter the entirety of conversation 2104, and b) the length of conversation 2104 is longer than parameters 2204, and thus parameters 2204 consume fewer memory resources than storing conversation 2104 itself. Thus, one of the technical problems of online travel searching is addressed with a technical solution, by storing a memory-efficient version of conversation 2104 in the form of parameters 2204. Further technical advantages are apparent because user 124e-1 may resume conversation 2104 on any other travel actor engine 112e, and is not constrained to the original travel actor engine 112e-1. System 100e may also be configured to thus incentivize the operator of travel actor engine 112e-1 to generate parameters 2204 to further improve adoption of this technological solution, (i.e. Kayak may receive a fee from Expedia in exchange for having reduced the friction for resumption of the conversation by means of the clipboard 2304).

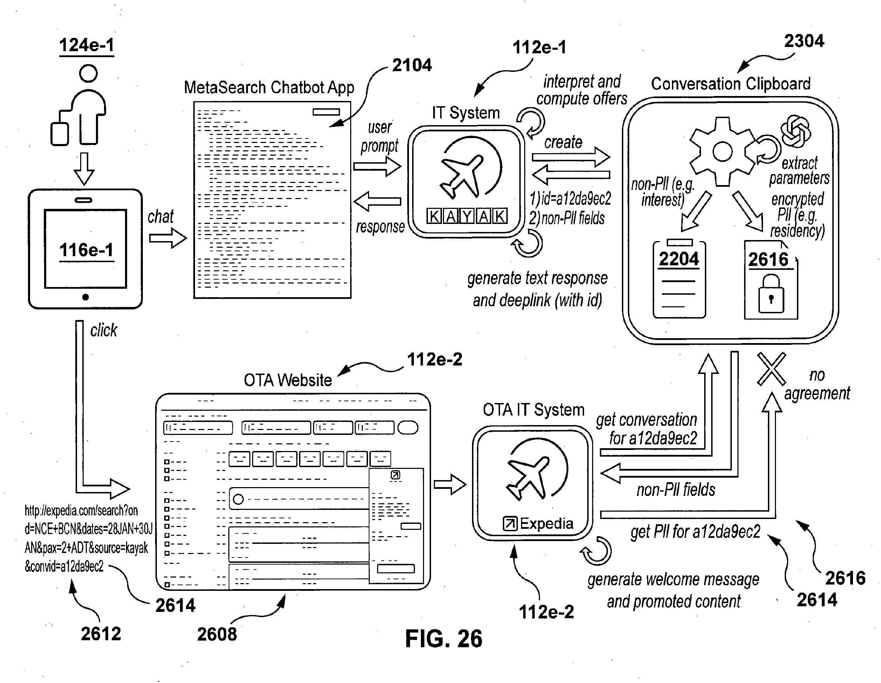

Figure 26 presents a variant on the foregoing discussion in relation to Figure 25. In Figure 26, travel actor engine 112e-1 is a meta-online travel agency such as Kayak, while travel actor engine 112e-2 is an online travel agency such as Expedia. The generation of parameters 2204 on clipboard 2304 from conversation 2104 can be used during a subsequent interaction with travel actor engine 112e-2. In Figure 26, instead of conversation 2104, user 124e-1 subsequently interacts with engine 112e-2 by a traditional web-interface 2608. When user 124e-1 uses hyperlink 2612, it includes a "deep-link" 2614 with a conversation identifier (in Figure 26, kayak&convid=a12da9ec2) that directs device 116e-1 to engine 112e-2 and also includes a pointer to parameters 2204 stored on clipboard 2304. In Figure 26, deep-link 2614 shares context by reference or an address to the storage location of clipboard 2304 on network 108e. Parameters 2204 are automatically loaded into web-interface 2608 to pre-populate a search query for travel itinerary options that satisfy parameters 2204. In this fashion, web-interface 2608 is populated more efficiently than prior art interactions with a web-interface for online travel agency websites.

Another aspect of Figure 26 contemplates personally identifying information (PII) 2616 being stored on clipboard 2304 along with parameters 2204. Deep-link 2614 can thus point to PII 2616. However, where there is no authorization to share PII 2616 from engine 112e-1 to engine 112e-2, then parameters 2204 may be passed to engine 112e-2 from clipboard 2304, while PII 2616 is withheld. Such authorization may be expressed from user 124e-1, for example.

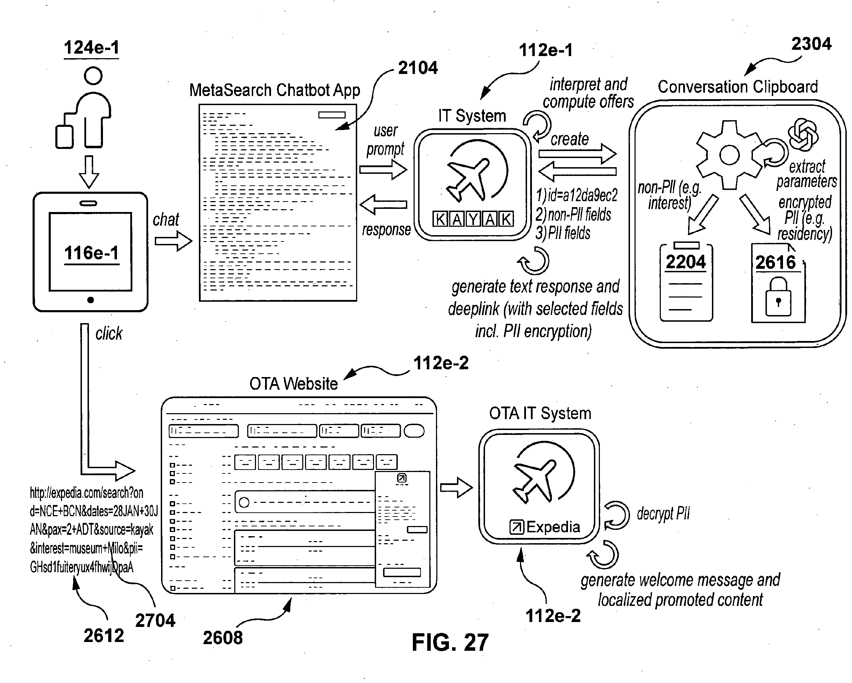

Figure 27 shows a further variant on Figure 26, whereby instead of deep-link 2614, deep-link 2704 is provided within hyperlink 2612. Deep-link 2704 embeds the contents of parameters 2204 directly into the link, thereby allowing immediate population of search terms into web-interface 2608. Pll 2616 may also be included inside deep-link 2704, encrypted.

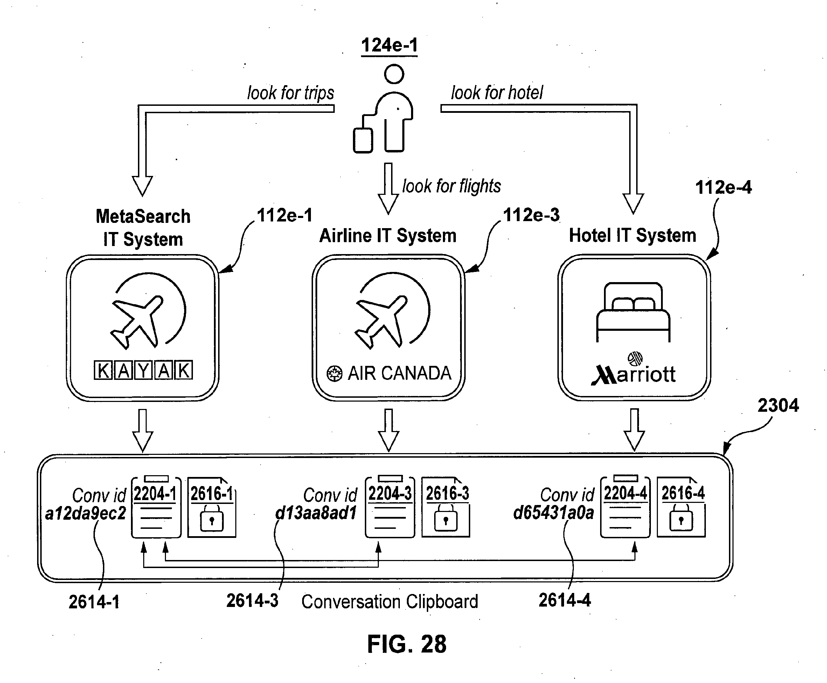

Figure 28 shows a further variant on Figure 25 and Figure 26, where clipboard 2304 tracks a plurality of interactions and/or conversations in the form of storing and hosting different parameters 2204 and associated PII 2616, respective to different travel-actor engines 112e, be they meta-online travel agencies, online travel agencies, airline actors (e.g. carriers), or accommodation actors (e.g. hotels) or any other type of travel actor. Clipboard 2304 can thus be used, according to Figure 28, as a scaled version of the previous examples. A person skilled in the art will continue to appreciate how wasted computing resources for repetitive searches is mitigated by the scaled solution illustrated in Figure 28.

In view of the above it will now be apparent that further variations, combinations, and/or subsets of the foregoing embodiments are contemplated. For example, collaboration platform 104 may be obviated or its function distributed throughout a variant on system 100, by incorporating collaboration platform 104 directly inside LLM engine 120. Likewise, collaboration platform 104 and travel management engine 122 can be combined into a single engine or platform. Likewise, collaboration platform 104, LLM engine 120 and travel management engine 122 may be combined into a single platform. The same possible variations apply to system 100a. It is to be understood that system 100, system 100a can also be varied and/or combined. It is thus to be generally understood that the various hardware nodes of the various platforms 104, engines 112, engine 120, engine 122 (and/or their counterparts in system 100a) can have all or part of their respective functions combined into one more nodes. While all such combinations are not specifically shown in the Figures, a person of skill in the art will nonetheless appreciate their possibilities. Similarly, such possibilities will also be apparent in relation to the various methods recited herein (including method 300, method 400 and method 1300) which can be combined with each other and/or implemented on system 100 or system 100a or variants thereon.

As another example, it can be noted that in Figure 15 and Figure 16 travel management engine 122a is omitted, but in variants collaboration platform 104a can pass traffic through travel management engine 122a and/or any components of travel management engine 122a that are used to effect method 1300 can be incorporated directly into collaboration platform 104a. So again, it is noted here and elsewhere that the hardware nodes in system 100 and system 100a can be merged or otherwise varied to effect method 300, method 400 or method 1300 or their variants.

Furthermore, the present specification is readily extensible into metaverse environments, where devices 116 include virtual reality or augmented reality hardware and operate avatars within a metaverse platform. The metaverse platform can host virtual travel agents in the form of metaverse avatars, whose speech is driven by the teachings herein. The teachings herein can also be incorporated into physical robots that operate according to the teachings herein.

While the present embodiments refer to travel searches, generic search contexts are also contemplated. For example, academic research for a given topic may be initiated on an LLM or chatbot platform, which in turn accesses site like: Google Scholar (https://scholar.google.com/); PubMed (https://pubmed.ncbi.nlm.nih.gov/); Scopus (https://www.scopus.com/); Web of Science (https://webofknowledge.com/); Microsoft Academic (https://academic.microsoft.com/); JSTOR (https://www.jstor.org/); ERIC (https://eric.ed.gov/); ScienceDirect (https://www.sciencedirect.com/); Academic Search Premier (https://www.ebsco.com/products/research-databases/academic-search-premier); Project MUSE (https://muse.jhu.edu/); SSRN (https://www.ssrn.com/); arXiv (https://arxiv.org/); Directory of Open Access Journals (DOAJ) (https://doaj.org/). Each of these sites can be substituted for travel actor engines 112a.

As another example, legal research may also be conducted, initiated, across sites Westlaw (https://www.westlaw.com/); LexisNexis (https://www.lexisnexis.com/); Bloomberg Law (https://pro.bloomberglaw.com/); HeinOnline (https://home.heinonline.org/); Google Scholar (https://scholar.google.com/) for legal documents; Justia (https://www.justia.com/); FindLaw (https://www.findlaw.com/); Public Library of Law (http://www.plol.org/); Lil (Legal Information Institute) (https://www.law.cornell.edu/); CanLII (https://www.canlii.org/); JSTOR (https://www.jstor.org/) for law reviews and journals; SSRN (https://www.ssrn.com/) for legal scholarship. Each of these sites can be substituted for travel actor engines 112a.

Other contexts include Streaming Services such as Netflix (https://www.netflix.com/), Hulu (https://www.hulu.com/), and Disney+ (https://www.disneyplus.com/) offer vast libraries of movies and TV shows; Food Delivery services including Uber Eats (https://www.ubereats.com/), DoorDash (https://www.doordash.com/), and Grubhub (https://www.grubhub.com/) deliver meals from local restaurants directly to consumers; Social Media platforms like Facebook (https://www.facebook.com/), Twitter (https://www.twitter.com/), and Instagram (https://www.instagram.com/) connect people and allow for the sharing of content; Job Search Websites such as Linkedln (https://www.linkedin.com/), Indeed (https://www.indeed.com/), and Monster (https://www.monster.com/) help individuals find employment opportunities; Real Estate Listings on Zillow (https://www.zillow.com/), Realtor.com (https://www.realtor.com/), and Redfin (https://www.redfin.com/) offer tools for buying, selling, or renting properties; Travel Booking Sites like Expedia (https://www.expedia.com/), Booking.com (https://www.booking.com/), and TripAdvisor (https://www.tripadvisor.com/) assist with planning trips and accommodations; Online Learning Platforms including Coursera (https://www.coursera.org/), Udemy (https://www.udemy.com/), and Khan Academy (https://www.khanacademy.org/) provide educational courses and resources; Freelance Services from Upwork (https://www.upwork.com/), Fiverr (https://www.fiverr.com/), and Freelancer (https://www.freelancer.com/) offer a marketplace for gig work; Music Streaming on Spotify (https://www.spotify.com/), Apple Music (https://www.apple.com/apple-music/), and Tidal (https://www.tidal.com/) allows for on-demand music listening.

As another example, e-commerce searches can also be effected in such variants, such as for cellular telephone plans, vehicle purchases, home purchases, whereby user messages containing unstructured search requests are received and an LLM engine is used to flesh out the search parameters and generate structured search requests which can then be passed to e-commerce search engines, and the returned results can replace the structured search request in the final result returned to the user. For example, online Shopping platforms like Amazon (https://www.amazon.com/), eBay (https://www.ebay.com/), and Walmart (https://www.walmart.com/) cater to a wide range of consumer goods.

The clipboard and related functionality of the embodiments discussed herein can be readily adapted to these and other search contexts, where the summary of the conversation is later used to resume on another platform.

An example conversation and clipboard for a real estate example is shown as follows:
User: Looking for a new home in the French riviera.
Chatbot: You might want to consider exploring real estate options in cities like Nice, Cannes, or Saint-Tropez in the French Riviera.
User: I want to see the sea when I wake up.
Chatbot: You may want to consider looking for waterfront properties in coastal cities like Nice, Cannes, or Antibes in the French Riviera.
User: Any specific zone in Nice?
Chatbot: For a sea view in Nice, you might want to explore properties in areas like Promenade des Anglais, Mont Boron, or the Port area.
User: What are the prices for Mont Boron?
Chatbot: The prices for properties in Mont Boron, Nice can vary widely, but it's known for luxury homes with stunning sea views. It's best to check with local real estate agencies or online property listings for specific pricing information.
User: How far is it from the highway?
Chatbot: Mont Boron in Nice is located approximately 10-15 minutes by car from the A8 highway, providing convenient access to transportation routes.
User: and the airport?
Chatbot: Mont Boron in Nice is situated around 20-30 minutes by car from Nice Côte d'Azur Airport, making it a convenient location for frequent travelers.
User: what is the regular size of a flat in that area?
Chatbot: The regular size of a flat in Mont Boron, Nice typically ranges from around 50 to 150 square meters, with larger luxury properties also available.
User: if you were a real estate agent, can you invent 3 proposals of flat with full details (including surface, accommodations...) that corresponds to my criteria? What can you propose in that area?
Chatbot: Here are three proposals for flats in Mont Boron, Nice, tailored to your criteria with an emphasis on sea views, convenience to transportation, and luxury living.

Proposal 1: Modern Sea View Apartment in Mont Boron
Surface: 120 square meters
Accommodations: 2 bedrooms, 2 bathrooms, open-plan living room and kitchen
Features: This contemporary apartment offers panoramic sea views from a spacious terrace. The interior is designed with high-end finishes, including marble countertops and hardwood flooring. The master bedroom has an ensuite bathroom with a rain shower and a walk-in closet. Floor-to-ceiling windows in the living area maximize the stunning view of the Mediterranean Sea. The building provides amenities such as a fitness center, a swimming pool overlooking the sea, and 24-hour security.
Price: €1,500,000
Proximity: 10 minutes by car to the A8 highway, 25 minutes to Nice Côte d'Azur Airport
Proposal 2: Luxury Penthouse with Rooftop Terrace in Mont Boron
Surface: 200 square meters
Accommodations: 3 bedrooms, 3 bathrooms, large living room, gourmet kitchen, private rooftop terrace
Features: This penthouse boasts a breathtaking 360-degree view of the sea and the city from its expansive rooftop terrace equipped with a Jacuzzi and outdoor kitchen. Inside, the apartment features designer furnishings, a state-of-the-art kitchen with premium appliances, and a smart home system. Each bedroom includes an ensuite bathroom with luxury fixtures. The residence offers two parking spaces, a communal swimming pool, and direct access to a private beach.
Price: €2,800,000
Proximity: 15 minutes by car to the A8 highway, 30 minutes to Nice Côte d'Azur Airport
Proposal 3: Charming Apartment with Garden in Mont Boron
Surface: 100 square meters
Accommodations: 2 bedrooms, 2 bathrooms, living room, kitchen, private garden
Features: This ground-floor apartment provides a rare combination of a sea view and a private garden, offering a serene outdoor living space. The interior is elegantly furnished, featuring a fully equipped kitchen and a cozy living room with direct access to the garden. The master suite includes a spacious bathroom and garden views. The property is part of a secure residence with a shared pool, underground parking, and a concierge service.
Price: €1,200,000
Proximity: 12 minutes by car to the A8 highway, 20 minutes to Nice Côte d'Azur Airport

The resulting clipboard 2304 is:

```
 {
    "area": "Mont Boron, Nice",
    "city": "Nice",
    "region": "French Riviera",
    "country": "France",
    "interest": "Sea view, luxury living, convenience to transportation",
    "date": "Not specified",
    "last_proposed_estates": [
   {
    "name": "Modern Sea View Apartment in Mont Boron",
    "surface": "120",
    "accommodations": "2 bedrooms, 2 bathrooms, open-plan living room and kitchen",
    "price": "€1,500,000"
   },
   {
    "name": "Luxury Penthouse with Rooftop Terrace in Mont Boron",
    "surface": "200",
    "accommodations": "3 bedrooms, 3 bathrooms, large living room, gourmet kitchen,
    private rooftop terrace",
    "price": "€2,800,000"
   },
   {
    "name": "Charming Apartment with Garden in Mont Boron",
     "surface": "100",
     "accommodations": "2 bedrooms, 2 bathrooms, living room, kitchen, private garden",
     "price": "€1,200,000"
   }
  ]
 }
```

Here is another example for music searching for telivsion soundtracks.
User: Looking for TV show OST
Chatbot: You might enjoy the TV show soundtracks from composers like Bear McCreary, Ramin Djawadi, and Jeff Beal. Some popular TV show soundtracks include "Game of Thrones," "The Walking Dead," and "House of Cards."
User: from Apple TV+?
Chatbot: For TV show soundtracks from Apple TV+, you can check out "For All Mankind," "Ted Lasso," and "The Morning Show" soundtracks.
User: who is the composer or for all mankind?
Chatbot: The composer for the TV show "For All Mankind" is Jeff Russo.
User: any similar artist ?
Chatbot: If you enjoy Jeff Russo's work for "For All Mankind," you might also like the music of Bear McCreary for "Battlestar Galactica" and Ramin Djawadi for "Game of Thrones."
User: I already know them, other ones?
Chatbot: You might also enjoy the music of Trevor Morris for "Vikings" and Clinton Shorter for "The Expanse."
User: can you list the music produced by clinton shorter?
Chatbot: Clinton Shorter has produced music for TV shows such as "The Expanse" and "Colony." He has also composed for films like "District 9" and "Pompeii."

The resulting clipboard 2304 is:

```
 {
   "artists": ["Bear McCreary", "Ramin Djawadi", "Jeff Beal", "Jeff Russo", "Trevor
   Morris", "Clinton Shorter"],
   "composers": ["Bear McCreary", "Ramin Djawadi", "Jeff Beal", "Jeff Russo", "Trevor
   Morris", "Clinton Shorter"],
   "performers": [],
   "interest": "TV show soundtracks",
   "genre": "OST",
   "period": "Contemporary",
   "last_proposed titles": [The Expanse", "Colony", "District 9", "Pompeii"]
   }
```

In other variants, collaboration platform 104 need not provide collaboration or other communication services between users 124, and thus collaboration platform 104 can simply be substituted with a chatbot platform (as per collaboration platform 104a of system 100a) that is used to fulfill the travel search dialogue with a given user 124 according to the teachings herein. Collaboration platform 104 can be incorporated into the LLM Engine 120.

Collaboration platform 104 can also be incorporated into travel management engine 122. Collaboration platform 104, LLM Engine 120 and travel management engine 122 can be incorporated into a single platform. Likewise, the functionalities of collaboration platform 104 and/or travel management engine 122 and/or LLM engine 120 can be incorporated into one or more travel actor engines 112, either as a full hardware integration and/or a software integration via API calls.

All variants in relation to system 100 discussed herein may also apply to counterparts in system 100a and system 100e.

In other variants, it can be noted in the foregoing that external calls can be made to websites such as Tripadvisor and Skytrax. These websites can be considered, in their own way, to be travel-actor engines even though they may not include booking engines. Accordingly, when teachings herein refer to "travel actor engines", a skilled reader should contemplate contextual possibility for travel actor engines to include "Travel Review and Rating Platforms" and/or "Travel Review Sites" such as Tripadvisor and Skytrax. Thus, the example in Figure 16 can be viewed as collaboration platform 104a interacting with two different travel-actor engines 112a; the first being Skytrax and the second the traditional travel booking and search engine. (It is also to be understood that interactions may be established with engines beyond travel-actor engines 112a. For example, a query could include "I want to go to the most mentioned destinations in Facebook by the top ski influencers", leading to an interaction with Facebook or another engine that maintains that data.)

In another variant, machine learning feedback can be used to further improve the context shifts and/or train the LLM Engine 120 in providing its dialogue with the user 124. The conversations between been users 124 and LLM Engine 120 can be archived and fed into a machine learning studio platform. The studio allows to train a machine learning algorithm. The machine learning algorithm, can for example, generate a new version of the orchestrator prompt engineering from Table 228-1, or any of the other Tables 228. Then the updated model can be deployed into method 300 via an application via a workflow from the machine learning studio platform to LLM Engine 120.

Accordingly, in this variant, one or more of the applications 224 may include the machine learning studio platform with any desired related machine learning deep-learning based algorithms and/or neural networks, and the like, which are trained to improve the Tables in method 300. (Hereafter machine learning applications 224). Furthermore, in these examples, the machine learning applications 224 may be operated by the processor 208 in a training mode to train the machine learning and/or deep-learning based algorithms and/or neural networks of the machine learning applications 224 in accordance with the teachings herein.

The one or more machine-learning algorithms and/or deep learning algorithms and/or neural networks of the machine learning applications 224 may include, but are not limited to: a generalized linear regression algorithm; a random forest algorithm; a support vector machine algorithm; a gradient boosting regression algorithm; a decision tree algorithm; a generalized additive model; neural network algorithms; deep learning algorithms; evolutionary programming algorithms; Bayesian inference algorithms; reinforcement learning algorithms, and the like. However, generalized linear regression algorithms, random forest algorithms, support vector machine algorithms, gradient boosting regression algorithms, decision tree algorithms, generalized additive models, and the like may be preferred over neural network algorithms, deep learning algorithms, evolutionary programming algorithms, and the like.

Such machine learning algorithms can, for example, increase efficiency in processing subsequent conversations that are similar to prior conversations.

A person skilled in the art will now appreciate that the teachings herein can improve the technological efficiency and computational and communication resource utilization across system 100 (and its variants, such as system 100a) by making more efficient use of network and processing resources in system 100, as well as more efficient use of travel actor engines112. At least one technical problem addressed by the present teachings includes the dynamic of repetitive network searching that consumes processing resources and bandwidth. Such repetitive searching arises in many contexts including travel searches. Enabling real-time access to the internet is generally incompatible with the static nature of large language model datasets, and different architecture and continuous updating, which would be computationally expensive and challenging to manage. At the same time, existing chat functionality does not address the problem of collecting rich and structured travel queries that can be used to provide meaningful searches. It should now also be apparent that LLM Engine 120 can be used as a natural language processing (NLP) engine for system 100 and its variants.

Furthermore, system 100 and its variants can provide a scripted conversation with an external large language model engine to match raw conversational input with standard input variables that can be fed to the travel-actor engines. If two or more variables are connected to each other (conditional input), then the query to the travel-actor engine can be triggered without including any condition, and the filtering-out/results-refining criteria can be extracted and applied to the raw travel outline to arrive to refined results in the form of a final travel itinerary.

It should be recognized that features and aspects of the various examples provided above can be combined into further examples that also fall within the scope of the present disclosure. In addition, the figures are not to scale and may have size and shape exaggerated for illustrative purposes.

## Claims

1. A method for network search performed by a computing engine, the method comprising:
establishing a connection with a client device over a network;
initiating a first session with the client device for engaging in a natural language conversation with the client device;
generating parameters using a large language model (LLM) engine based on the conversation;
storing the parameters received from the LLM engine with an identifier in a virtual clipboard hosted on the network for resumption of the conversation based on the parameters.

2. The method of claim 1 further comprising detecting a termination of the first session before generating the parameters.

3. The method of claim 1 wherein the computing engine is a meta-search engine.

4. The method of claim 1 wherein the computing engine and the LLM engine are on distinct platforms.

5. The method of claim 1 wherein the computing engine and the LLM engine are integrated into a single platform.

6. The method of claim 1 wherein the natural language conversation is performed by a chatbot application separate from the LLM engine.

7. The method of claim 1 wherein the natural language conversation is performed by a chatbot application integrated into the LLM engine.

8. The method of claim 1 wherein the natural language conversation is performed by a chatbot application as a browser extension on the client device that is controlled by the computing engine.

9. The method of claim 1 wherein the virtual clipboard is hosted by the computing engine.

10. The method of claim 1 wherein the virtual clipboard is hosted by a virtual clipboard engine separate from the computing engine.

11. The method of claim 1 wherein the conversation is resumed on a second computing engine in a second session.

12. The method of claim 11 wherein the second computing engine is hosted by one of an online travel agency, a music search engine, a real-estate search engine, legal research engine, media streaming service engine; food delivery engine; social media platform; job search engine; online learning platforms; and freelance service search engine.

13. The method of claim 1 wherein the identifier is associated with personally identifiable information (PII) of a user operating the client device that is stored on the virtual clipboard.

14. The method of claim 13 wherein a second computing engine is configured to send an inquiry for permission to access the PII.

15. The method of claim 1 wherein the conversation concerns travel-planning and includes one or more of origin, destination, number of passengers, dates, activities and budget preferences and the structured query includes fields matching the preferences.

16. The method of claim 1 further comprising:
continuing the natural language conversation during a second session with a second computing engine;
updating the parameters using the LLM engine; and,
storing the updated parameters received from the LLM engine with an identifier in the virtual clipboard hosted for resumption of the conversation using the updated parameters.

17. The method of claim 1 wherein the conversation is a travel planning conversation and the method further comprises:
continuing the natural language travel-planning conversation during a second session with a second computing engine;
generating a travel itinerary based on the travel travel-planning conversation; and
sending the itinerary to the client device.

18. The method of claim 1 wherein the parameters are generated in a structured JSON format from unstructured content of the conversation.

19. The method of claim 1 wherein the parameters consume less memory than the conversation.
